# EUROPEAN PATENT SPECIFICATION

(11) **EP 1 575 350 B1**
(45) Date of publication and mention of the grant of the patent: **15.04.2009**
(21) Application number: 03789366.6
(22) Date of filing: 19.12.2003
(51) Int. Cl.: A01B 59/06, B62D 49/06

(54) **AUTOMATED HITCHING SYSTEM**
AUTOMATISCHES KUPPLUNGSSYSTEM
SYSTEME D'ATTELAGE AUTOMATISE

(30) Priority: 19.12.2002 GB 0229570; 05.08.2003 GB 0318264; 18.12.2003 FR 0314899
(43) Date of publication of application: 21.09.2005
(73) Proprietor: Agco SA, 60026 Beauvais (FR)
(72) Inventor: RATEAU, Andre, F-60408 Franscastel (FR)
(74) Representative: Morrall, Roger
(86) International application number: PCT/EP2003/014667
(87) International publication number: WO 2004/056168

(56) References cited:
- US-A- 4 176 727
- US-A- 4 216 975
- US-A- 4 340 240
- US-B1- 6 321 851

## Description

### Field of the Invention

The invention relates to hitching system for connecting machines to vehicles, in particular to hitching systems for connecting machines to agricultural tractors and utility vehicles.

### Background of the Invention

It is common for vehicles such as agricultural tractors and utility vehicles to comprise hitches for the attachment of implements to the vehicle.

It is also common for such vehicles to be provided with a power take off (hereafter referred to as PTO) shaft. Many implements are designed to be driven by the PTO shaft.

When hitches and PTO shafts were first introduced on tractors and utility vehicles they were provided at the rear of the vehicle. However, it is now common for hitches and PTO shafts to be provided on the front and rear of such vehicles.

With the passage of time the type of equipment used in agriculture and utility application has become larger and heavier, and is hence very difficult to manoeuvre manually.

Also, the operation of hitching implements to vehicles can be dangerous if workers choose to stand between the vehicle and the implement to be attached thereto.

PTO shafts were long since identified as potential sources of danger, and many features have been adopted to reduce hazards associated with PTO shafts.

With regard to agricultural tractors in particular, these vehicles are often provided with a separate hitching arrangement for the attachment of trailed implements thereto. This separate hitching arrangement is usually located in the same region as the three point hitch. This crowds an area of the chassis.

A number of solutions have been proposed to automate the attachment of implements to the three point linkage. One proposal is to provide link-ends which are automatically lockable.

Another solution is to mount a frame on the three point linkage, the frame having automatic couplings for attachment to corresponding pins mounted on the implement. This solution is described in US 4,176,727.

US 4,176,727 also illustrates the automatic attachment of the PTO shaft to the implement.

Whilst the hitch arrangement of US 4,176,727 does provide for the automatic hitching of implements to the vehicle, certain components of the arrangement are rigid and therefore make hitching on uneven ground difficult.

The invention seeks to provide an improved automatic hitching arrangement.

### Summary of the Invention

The invention provides a vehicle as specified in Claim 1.

Another aspect of the invention provides a method of hitching an implement to a vehicle.

### Brief Description of the Drawings

In the drawings, which illustrate a preferred embodiment of the invention for exemplary purposes.
- Figure 1: is a schematic representation of an embodiment of the invention;
- Figure 2: is a partial view of the embodiment shown in Figure 1;
- Figure 3: is a side view of the embodiment shown in Figure 2, with an implement attached to the vehicle;
- Figure 4: is the view shown in Figure 3, but with the implement in the process of being attached to the vehicle;
- Figure 5: is a schematic representation of the embodiment shown in Figure 2 and 4 from a different angle;
- Figure 6: is a close-up schematic representation of the embodiment shown in Figure 1, illustrating the hitch frame;
- Figure 7: is a close-up schematic representation of the embodiment shown in Figure 1, illustrating the chassis mount of the top link; and
- Figure 8: is a schematic representation of the embodiment shown in Figure 1, with the hitch frame retracted;
- Figure 9: is a close-up schematic representation of a part of a hitch frame;
- Figure 10: is a side view of a second embodiment of the invention;
- Figure 11: is a plan view of the embodiment shown in Figure 10;
- Figure 12: is a plan view of the embodiment shown in Figure 10, with the lower links extended;
- Figure 13: is a plan view of the embodiment shown in Figure 10, illustrating the power take off shaft in detail;
- Figure 14: is a schematic representation of the second embodiment of the invention with the lower links retracted;
- Figure 14A: is an alternative schematic representation of the second embodiment of the invention;
- Figure 15: is a schematic representation of a third embodiment of the invention;
- Figure 16: is a schematic representation of the embodiment shown in Figure 15 with a hitch frame attached thereto, and the hitch in an extended and the raised position;
- Figure 17: is a schematic representation of the embodiment shown in Figure 16, with the hitch in the lowered position; and
- Figure 18: is a schematic representation of the embodiment shown in Figure 15 with the hitch in a retracted and raised position.
- Figure 19: is a schematic representation of a fourth embodiment of the invention;
- Figure 20: is a schematic representation of the embodiment shown in Figure 19 with a hitch frame attached thereto, and the hitch in an extended and the raised position;
- Figure 21: is a schematic representation of the embodiment shown in Figure 20, with the hitch in the lowered position;
- Figure 22: is a schematic representation of the embodiment shown in Figure 19 with the hitch in a retracted and raised position;
- Figure 23: illustrating the rear end of a tractor comprising a linkage of the type shown in Figures 19 to 22, with a hitch frame attached;
- Figure 24: illustrates the rear end of a tractor comprising a linkage of the type shown in Figures 19 to 22, with the hitch frame detached;
- Figure 25: is a schematic representation of a fifth embodiment of the invention;
- Figure 26: is a schematic representation of the embodiment shown in Figure 25 with a hitch frame attached thereto, and the hitch in an extended and raised position;
- Figure 27: is a schematic representation of the embodiment shown in Figure 26, with the hitch in the lowered position;
- Figure 28: is a schematic representation of the embodiment shown in Figure 25, with the hitch in a retracted and raised position;
- Figure 29: illustrates the rear end of a tractor comprising a linkage of the type shown in Figures 25 to 28, with a hitch frame attached;
- Figure 30: illustrates the rear end of a tractor comprising a linkage of the type shown in Figures 25 to 28, with the hitch frame detached;
- Figure 31 1: is a schematic representation of a sixth embodiment of the invention;
- Figure 32: is a schematic representation of the embodiment shown in Figure 31 with a hitch frame attached thereto, and the hitch in an extended and raised position;
- Figure 33: is a schematic representation of the embodiment shown in Figure 32, with the hitch in the lowered position;
- Figure 34: is a schematic representation of the embodiment shown in Figure 32, with the hitch in a retracted and raised position; and

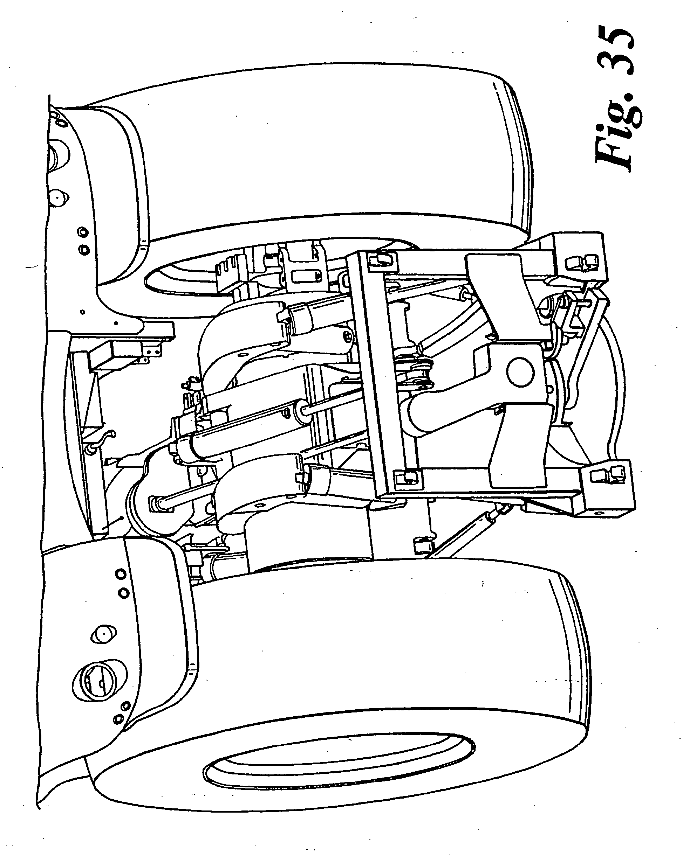

- Figure 35: illustrates the rear end of a tractor comprising a linkage of the type shown in Figures 31 to 34.

### Detailed Description of the Preferred Embodiment

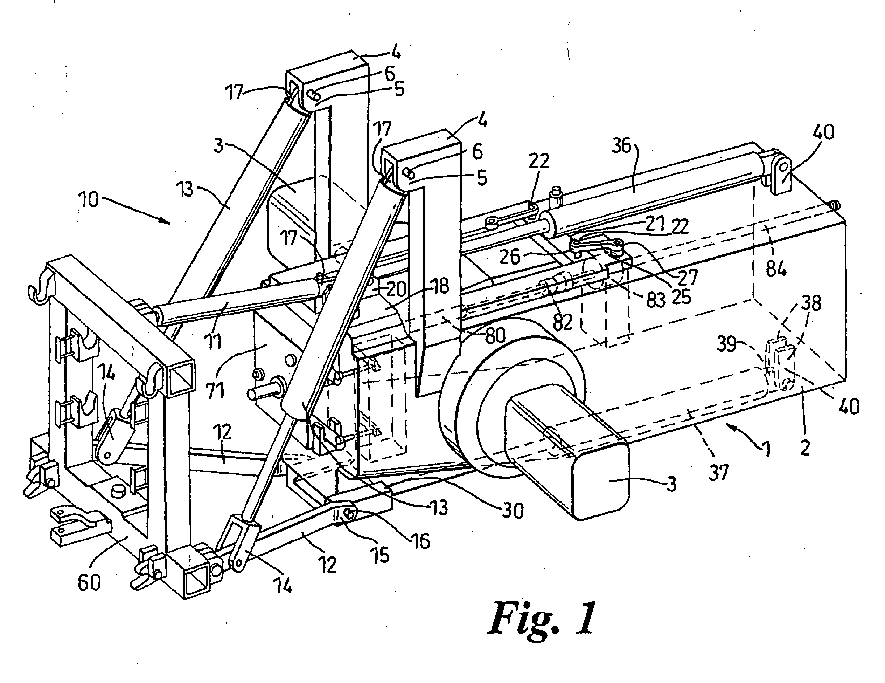

Referring now to Figure 1, there is shown a transaxle 1 comprising a transmission chassis 2 and rear axle half shaft housing 3 (For the sake of clarity, other parts of the vehicle are not illustrated).

To the rear of the half shaft housing 3, and mounted on top of the transmission casing 2 are a pair of spaced apart pillars 4. Extending rearwardly from the top of each pillar 4 is a bifurcated bracket 5, each bifurcation including a bore 6.

A three point linkage 10 comprises a pair of lower links 12 and a top link 11. The lower links 12 include link end portions 15, which ends are attached to a lower link mounting member 30 by means of pins 16. The lower links 12 also include second end portions for attachment to an implement, or to a quick hitch frame as shown in the Figures. The second end portions may be conventional ball ends, or of the lockable jaw link end type.

The lower links 12 are pivotable about the pins 16 attaching said links 12 to said link mounting member in both the vertical and horizontal planes, pivoting in the horizontal plane being provided for by ball ends in end portions 15.

For each lower link 12, a hydraulic ram 13 of the conventional double acting piston and cylinder configuration extends between one of the pillars 4 and the lower link 12. One end of the hydraulic ram 13 includes a bracket 17 which enters the pillar 4 between the bifurcations 5. The bracket 17 includes a bore, and a pin passes through the said bore and the bore 6 in the bifurcations 5 to attach the hydraulic ram 13 to the pillar 4.

The other end of the ram 13 comprises a bifurcated end portion 14, each bifurcation including a bore, and the lower link 12 including a bore, with a pin passing through the aligned bores to attach the hydraulic ram 13 to the lower link 12.

By adjusting the length of the ram through the introduction or removal of the hydraulic fluid, the lower links can be raised or lowered.

The top link 11 has first and second ends, one end being connectable to the tractor by means of a top link mounting member 18 which mounts a link bracket 19, and the other connectable to an implement or frame. The top link 11 includes end portion 17 for attachment to said top link bracket or implement. The top link 11 is a standard component and therefore its construction will not be described in detail.

The top link mounting member 18 and the lower link mounting member 30 are each mounted on slides.

The slidable mounting facilities for the top link mounting member 18 is best described with reference to Figures 1, 5 and 6.

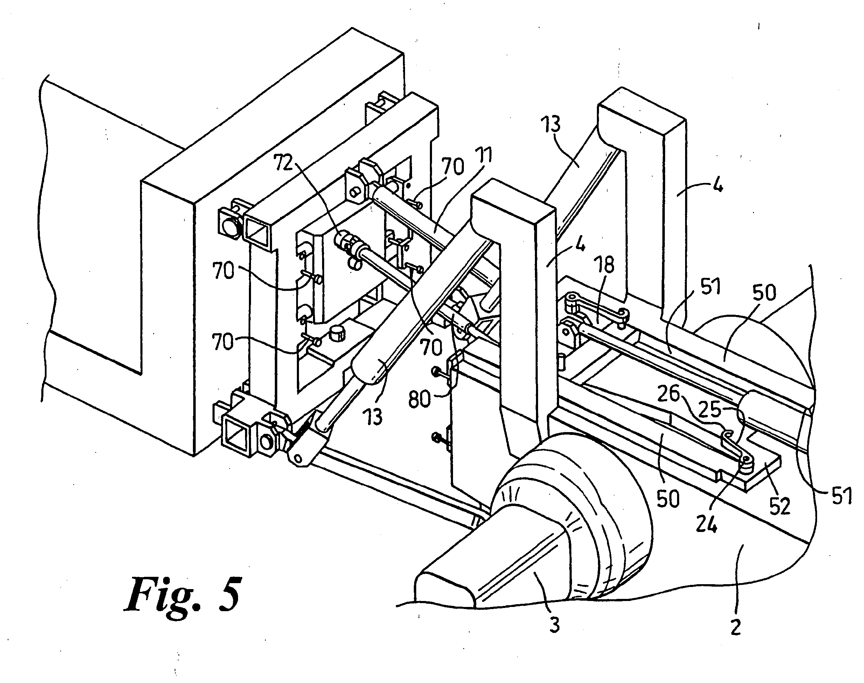

Now with reference to Figure 5, mounted on the upper surface of the transaxle casing 2 are a pair of spaced apart rails 50, which may be cast as part of the transaxle casing 2 or subsequently fastened thereto.

The inner edge of each rail 50 is chamfered such that a recess 51 is formed between the upper surface of the transaxle casing 2 and the upper inner edge of the rail 50. The recess is of a substantially triangular cross-section.

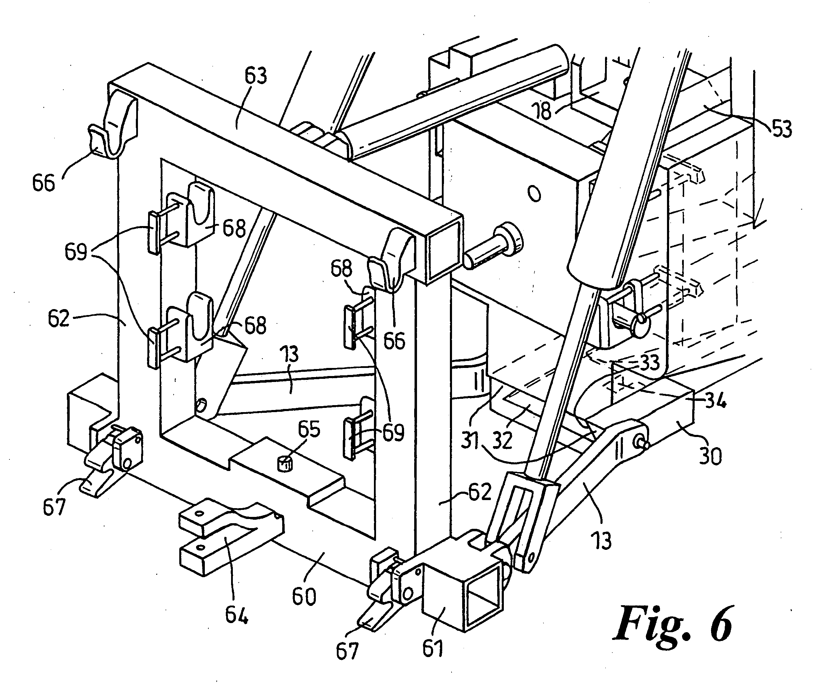

Referring now to Figures 1 and 6, the top-link mounting member is in the form of a plate, and it can be seen that an edge 53 of the plate 18 is machined such that it is substantially triangular in cross-section, the cross-section of the edge 53 corresponding to the cross-section of the recess 51. Figure 6 shows one edge of the top link mounting member 18. The edge to the opposite side of the top link mounting member 18 is likewise machined. The top link mounting member 18 can therefore slide along the longitudinal axis of the tractor, horizontal and vertical movement thereof being constrained by the rails 50, and recesses 51 co-operating with the edges 53.

The slidable mounting facility for the lower link mounting member 30 is best described with reference to Figure land 6.

The lower link mounting member 30 includes a central recessed portion 32, the edges 33 of the recess 32 being substantially triangular.

The underside of the transaxle casing 2 includes a single rail 35, the edges 36 of which are substantially triangular in cross-section. The cross-section of edges 36 correspond to the cross-section of the edges 33 of recess 32, thereby facilitating sliding of the lower link mounting member 30 along the longitudinal axis of the tractor.

Sliding of both the top link mounting member 18 and the lower mounting member 30 is affected by hydraulic rams.

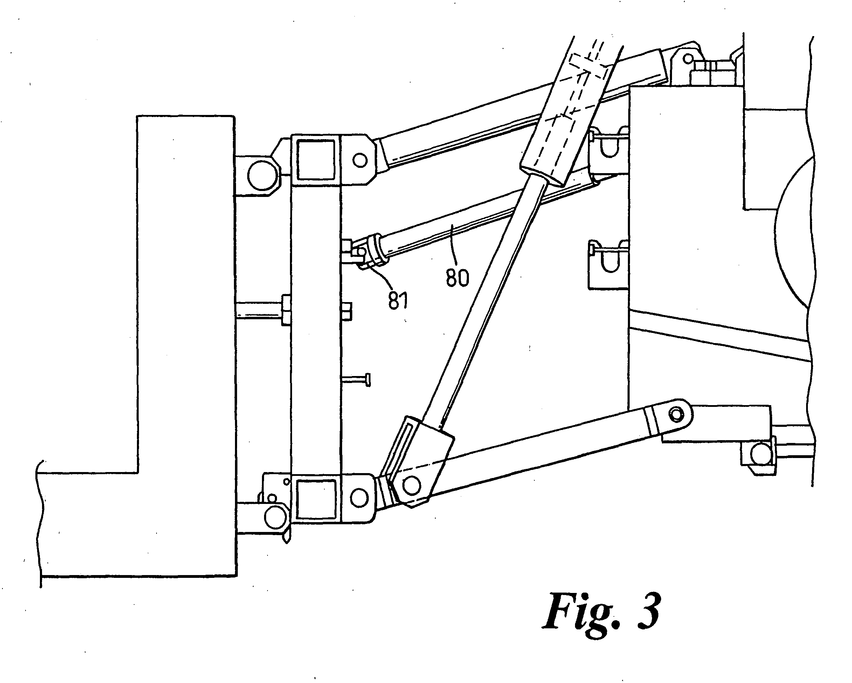

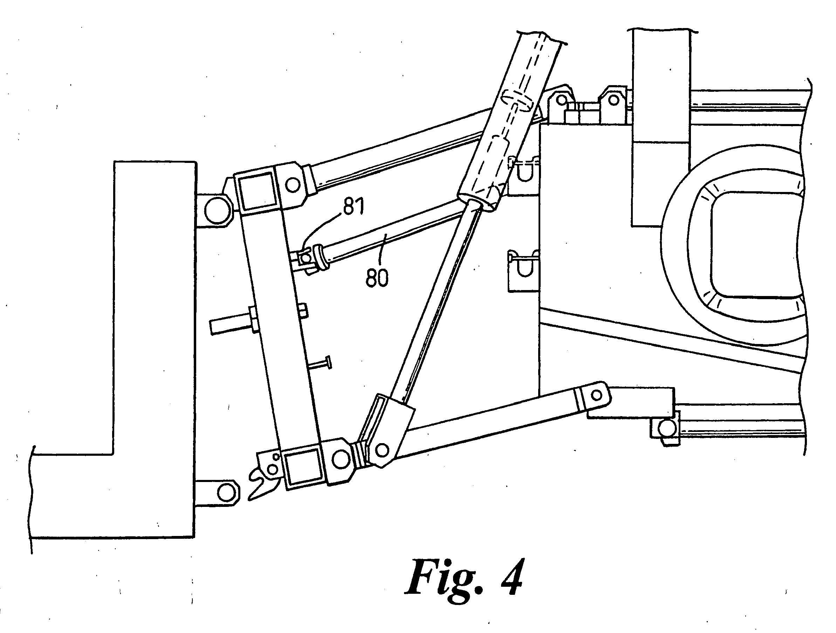

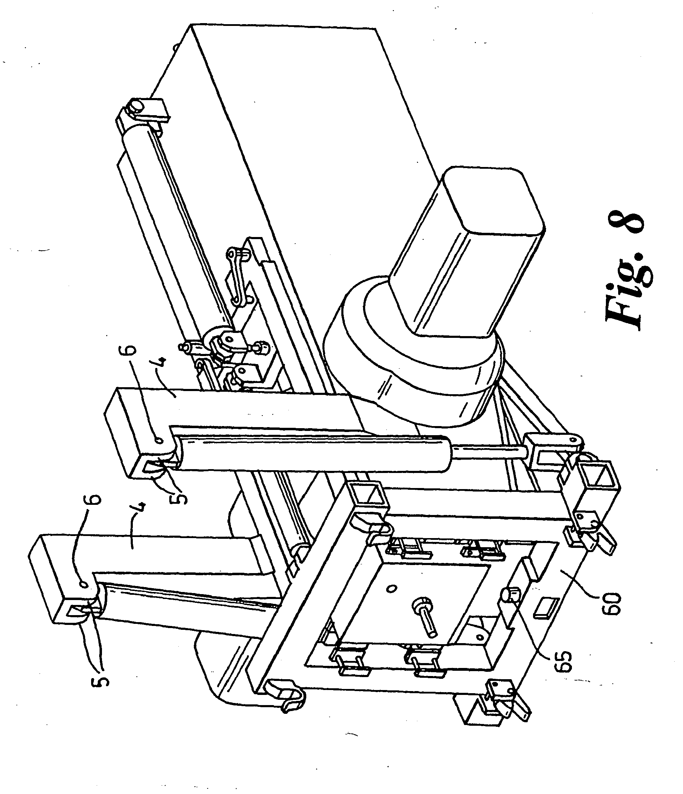

A lower hydraulic ram 37 extends between a chassis mount 38 and an attachment point 34 of the lower link mounting member 30. The hydraulic rams 37 and 39 are of a conventional double acting piston and cylinder arrangement. By selectively introducing and removing hydraulic from the hydraulic rams 37 and 39, the top link and lower link mounting members 18 and 30 can be moved forwards and backwards relative to the transaxle housing, and between the position shown in Figures 1 to 7 and the position shown in Figure 8.

An upper hydraulic ram 39 extends between a chassis mount 40 and an attachment point on the top link mounting member 18, said attachment point consisting of a pair of spaced apart brackets 20.

In the drawings, a quick hitch frame 60 is attached to the three point linkage. The quick hitch frame 60 will be described with reference to Figures 6 and 8.

The quick hitch frame 60 comprises lower and upper cross members 61 and 63 respectively joined together by spaced apart uprights 62. The cross members and uprights in the example are fashioned from box section steel.

The lower cross member 61 mounts a clevis hook 64 which can be used to attach implements having drawbars to the tractor. As can be seen from Figure 8, the clevis hook 64 is removably mounted in the frame.

The lower cross member 61 also mounts a pintle 65 for use in attaching implements having drawbars to the tractor. The provision of the pintle 65 or similar attachment members to the lower cross bar does away with the requirement for a separate automatic hitch. Instead of separate hydraulic rams, as required by a typical automatic hitch, the hydraulic rams 13 are used to raise and lower the frame 60, and hence objects attached to it. When towing implements using the pintle 65, the frame would usually be in the retracted position shown in Figure 8. This is because the hitch member 65 is brought closer to the rear axle, thereby reducing the pivotal moment about said axle, generated by any downward force on the hitch member 65.

The upper cross member 63 mounts a pair of spaced apart upper jaws 66, whilst the lower cross member 61 mounts a pair of lower jaws 67.

The upper and lower jaws 66 and 67 are used to attach the tractor to implements provided with attachment points which are co-operable with said jaws. The jaws 66 and 67, and suitable attachment points for implements are known to those skilled in the art, and are therefore not be described in detail herein.

The frame 60 also mounts four brackets 68 each including a 'U' shaped slot. These brackets are used to facilitate the attachment of the PTO stub shaft final drive 71 to the frame 60.

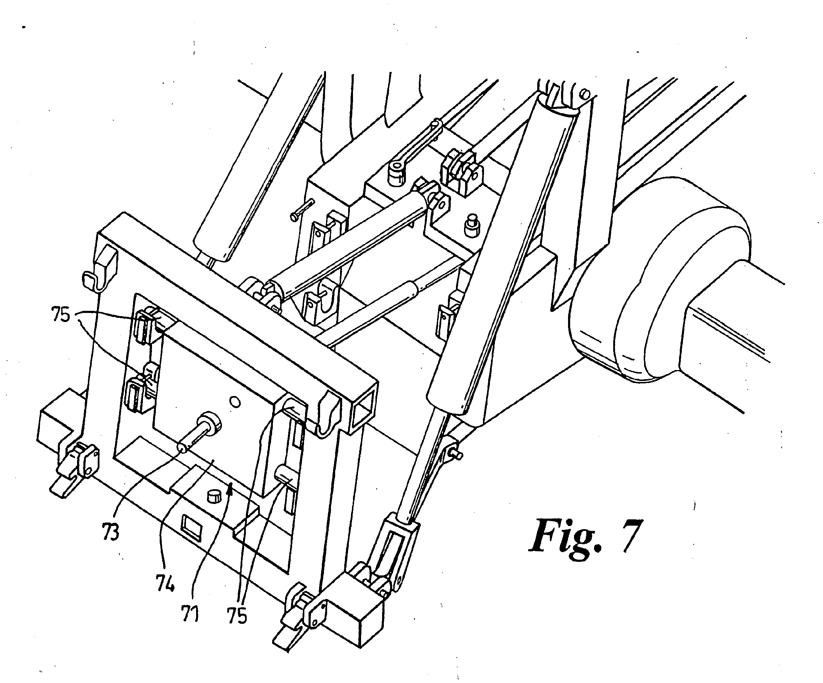

As can be seen from Figures 5 and 7, the PTO stub shaft final drive 71 comprises a housing 74 mounting a rotatable input shaft 72 and a rotatable output shaft consisting of a PTO stub shaft 73, and mounted within the housing, reduction gearing to reduce the speed of the PTO stub shaft with respect to the speed of the input shaft 72.

Pins 75 extend from each side of the housing 74, the pins 75 being so shaped and located as to sit in the U shaped slots of bracket 68. The housing 74 is locked in place within the frame by locking pins 69, 70 passing through the brackets 68.

The input shaft 72 of the PTO final drive 71 is driven by a cardan shaft 80, one end of which is connected to the input shaft 72 by a universal joint 81. The other end of the cardan shaft 80 is attached to an output of a PTO clutch box 83 by a universal joint 82. The PTO clutch box 83 has an input for rotational power, which comprises a shaft 84 connected to a power source, for example the tractor's engine (not shown).

The PTO clutch box 83 is fixed to the transaxle casing 2. A mounting member 21, mounts a bearing 85 which supports the shaft 84, said shaft 84 being slidably mounted in the PTO clutch box 83.

The bearing mounting member 21 is slidable between a retracted position as shown in Figure 8 and an extended position as shown in Figures 1 to 7, and is of the same shape in cross-section as the link mounting member 18, the said bearing mounting member 21, sliding in the rails 50, and being held in place by the recess 51.

The mounting member 21 is held in the position shown in Figure 1 by a bracket 25 having a hooked end which co-operates with a pin 22 extending upwardly from the upper surface of the mounting member 21. The bracket is pivotally mounted on a pin 27 extending from the transaxle casing 2.

Whereas the bearing 85 is located within the transaxle casing, the mounting member 21 is mounted on the outside of the transaxle casing 2, on the upper surface thereof. The bearing 85 is attached to the mounting member 21 by a web which passes through a slot in the transaxle casing 2, the web sliding in the slot as the transfer box mounting member 21 slides between the retracted and extended positions shown in Figure 8 and Figures 1 to 7 respectively.

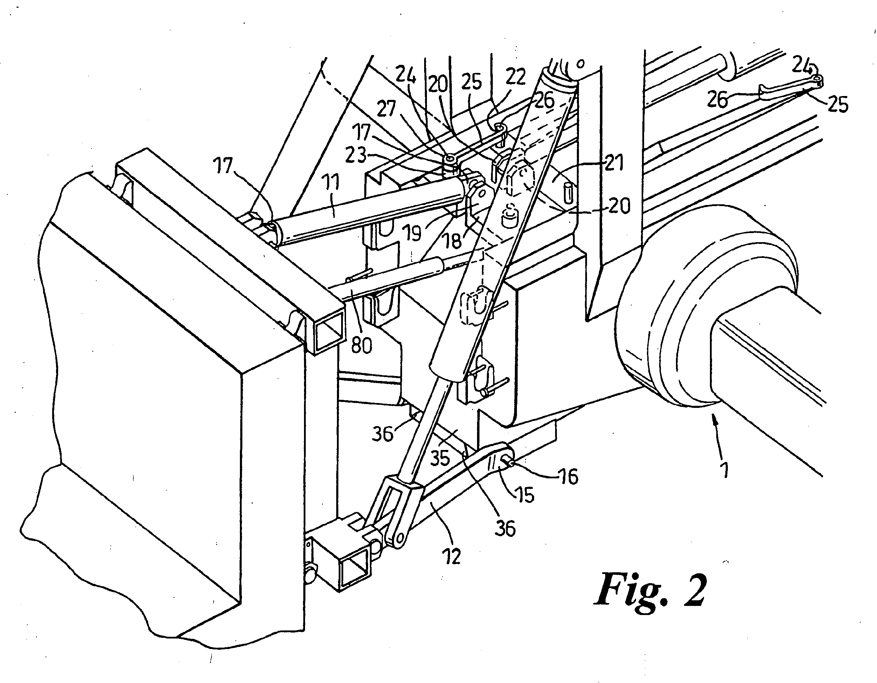

Referring now to Figure 2, it can be seen that when the transfer box mounting member 21 is in the extended position its front edge abuts the rear edge of the top link mounting member 18, and is locked thereto by a bracket 25 having at one end a hook 26 which co-operates with a pin 22 extending upwardly from the upper surface of the said transfer box mounting member 21. The bracket 25 comprises at its other end an eye 24 for pivotally mounting the bracket 25 on a pin 27 extending upwardly from the transaxle casing 2.

The drawings illustrate a splined PTO stub shaft 73 as the means by which rotational power is transferred to an implement. A splined stub shaft is the standard means by which rotational power is transferred from an agricultural tractor to an implement. However, the splined stub shaft 73 may be replaced by other suitable means, such as one half of a toothed dog clutch, the other half being part of the implement. Another alternative involves mounting half of a toothed dog clutch previously mentioned, on the splined stub shaft 73. A power transmission arrangement including a toothed dog clutch is described in US 4,176,727.

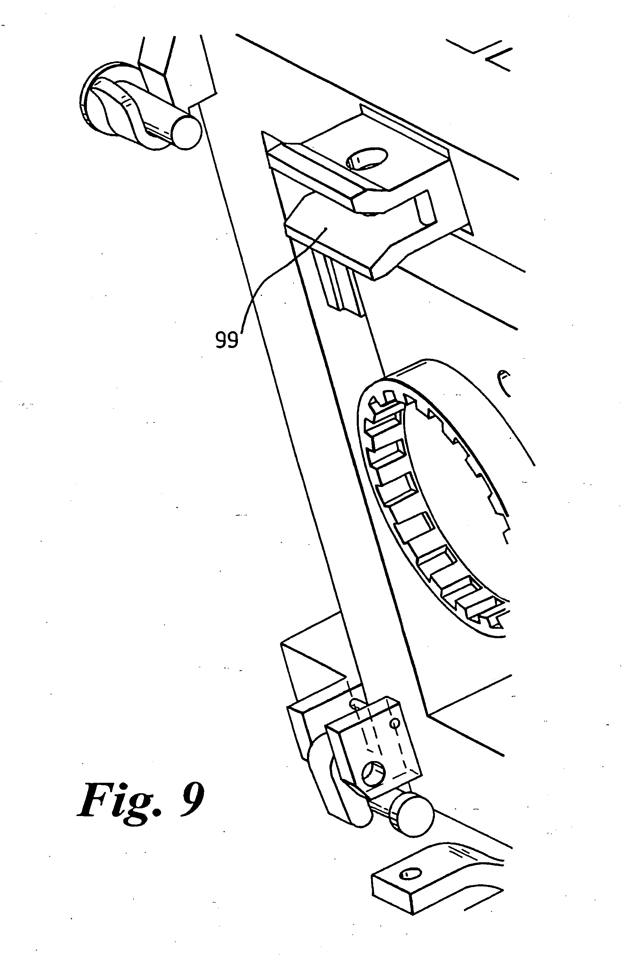

The hitch system of the invention provides the following modes of operation:
1. With the hitch set up as in Figure 1, but with the frame 60 removed, the three point hitch 10 functions in the manner of a conventional three point hitch, i.e. the upper and lower links are attached to the implement individually. Any equipment requiring attachment to the PTO, is attached thereto by a separate PTO drive shaft extending between the tractor and the implement, again in a conventional manner.
2. With the held hitch set up as shown in Figure 1, and with the frame attached, the tractor is attachable to implements having a quick hitch arrangement adapted to connect with the frame 60. If the implement requires drive from the PTO, a separate shaft is used to connect the implement to the PTO stub shaft 73, as in paragraph 1 above.
3. With the hitch set up as shown in Figure 2 - 4 and 7, the tractor is attachable to implements having a quick hitch arrangement adapted to connect with the frame 60, and having a power-take-off input arranged to received the stub shaft 73. In this set up, hitching of the tractor to the implement is fully automatic.
4. With the set up shown in Figure 6, the hitch provides the functionality of a swinging drawbar. A standard swinging drawbar found in most agricultural tractors provides for three alternatives. First, the drawbar may be free to swing between limits either side of a central longitudinal axis of the tractor. Second the drawbar may be locked in the position such that it is in line with the central longitudinal axis of the tractor, and third, the drawbar may be locked in a position to one side of the central longitudinal axis of the tractor.
   The clevis hook 64 provides for attachment of the tractor to the implement. The functionality of a swinging drawbar is provided by the lower links of the hitch. In the set up shown in Figure 6, the lower links 12 are free to pivot on the mounting pins 16 towards and away from the central longitudinal axis of the tractor. Swaying of the lower links is prevented by adjustable stabilizers (common to most tractors), and in this embodiment two stabilizers are provided each mounted between the lower link mounting member 30, and a respective one of the lower links which can also be adjusted to lock the lower links such that the clevis hook 64 is in line with, or to one side of, the central longitudinal axis of the tractor.
   An advantageous feature of the links of the invention is that the vertical position of the clevis hook can be adjusted using the lift arms 13, whereas conventional swinging drawbars are fixed in their vertical positions.
5. With the hitch set up as shown in Figure 8, an automatic hitch is provided, with the hydraulic lift cylinders 13 being used to raise and lower the frame 60, thereby allowing the pintle 65 to be positioned beneath a towing hook of an implement, and then lifted to engage the pintle 65 with the towing hook of an implement.
6. With the hitch set up as shown in Figure 9 the hitch provides for the attachment of a close coupled clevis hitch. On a conventional tractor such a clevis hitch is attached to the transaxle housing, and is usually attachable at a number of different positions to provide different towing heights.

In the hitch of the invention the clevis is fixed to the frame 60, and vertical adjustment of height of the clevis above the ground is provided by the lift arms 13.

Whereas on a conventional tractor the clevis may be attached to the tractor to provide a number of distinct hitch heights, the invention provides for infinite variation of the hitch height between upper and lower limits. This is advantageous because when pulling four wheel trailers the optimum position of the transaxle drawbar is horizontal as this increases stability, particularly when braking, and aids reversing. Whilst conventional tractors provide for adjustment for hitch height to bring the drawbar close to horizontal, the invention provides for adjustment of the hitch height to give a substantially horizontal drawbar.

In each of the set ups described in paragraphs 4 to 6, where the hitch is being used to attach an implement to the tractor by a drawbar, the hydraulic cylinder 11, 13, 32 and 39 may be used to damp surge loads.

The lift cylinder 13 may provide for damping of vertical loads, whilst the cylinders 13, 37 and 39 may be used to damp any horizontal surge loads.

The lift cylinder 13 may be provided with a pressure sensor to provide load information for example, when used with a semi-mounted trailer, the pressure in the cylinder 13 is indicative of the vertical load on the draw bar, and hence the load inside the trailer. The information from the pressure sensor can be used to adjust the trail braking pressure according to trailer load.

In addition to moving the hitch frame 60 from a retracted to an extended position to suit the type of work to be done with the implement, the hydraulic cylinders 37 and 39 are adjustable to facilitate easy hitching of the implements to the tractor. This is achieved by the tractor operator first driving the tractor into close proximity of the implement to be attached. The cylinders 37 and 39 are then extended or retracted to move the frame 60 towards or away from the implement, whilst the cylinders 13 are extended or retracted to adjust the height of the frame 60. The top link 11 may be extended or retracted to adjust the angle of the frame 60 to the vertical.

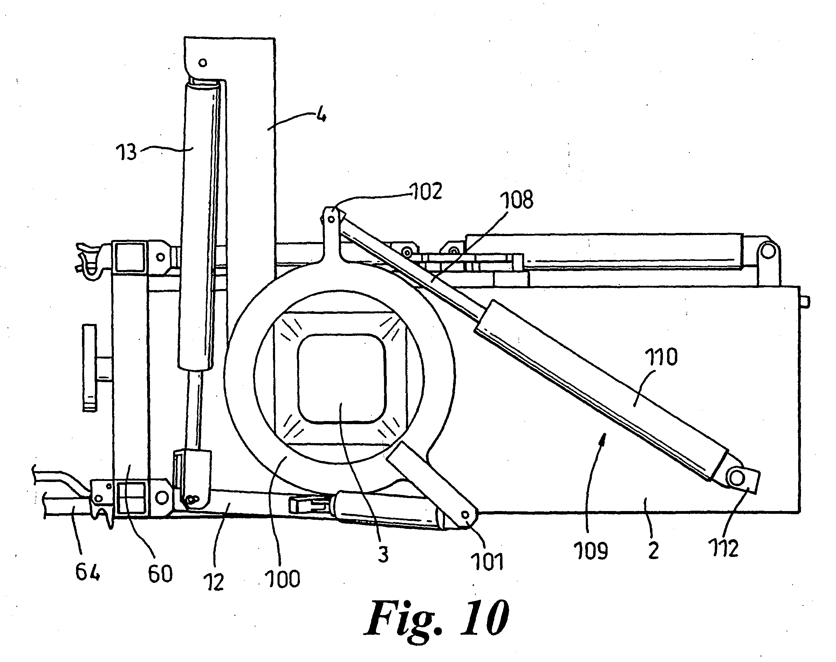

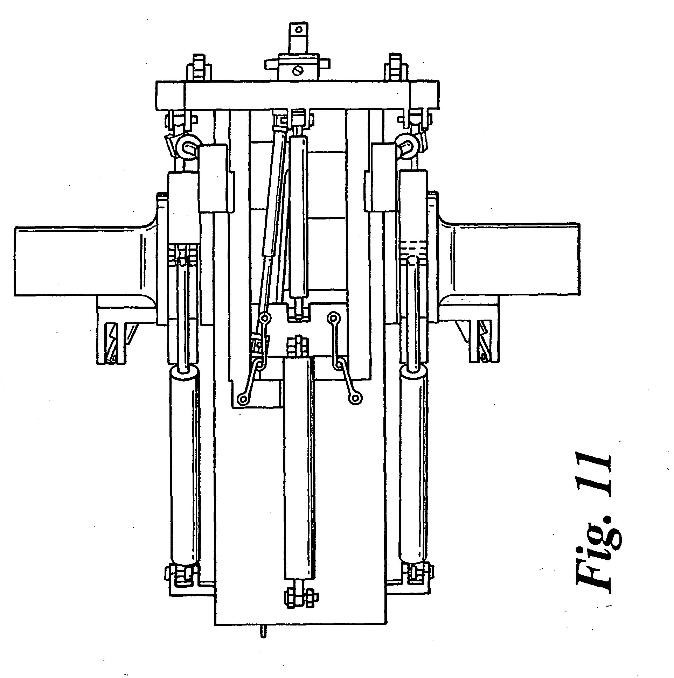

Figures 10 to 14 show an alternative embodiment of the invention, the hitch frame 60 being moveable towards and away from the rear of the transaxle casing 2 by means of a rotatable member 100.

A rotatable member 100 is mounted on each of the final drive housings 3 of the transaxle casing 2, the mounting providing for rotation of said rotatable member about said final drive 3.

Each rotatable member includes attachment members 101,102. The attachment member 102 consists of a pair of spaced apart lobes 105 each entering substantially tangentially from the outer surface of the rotatable member 100.

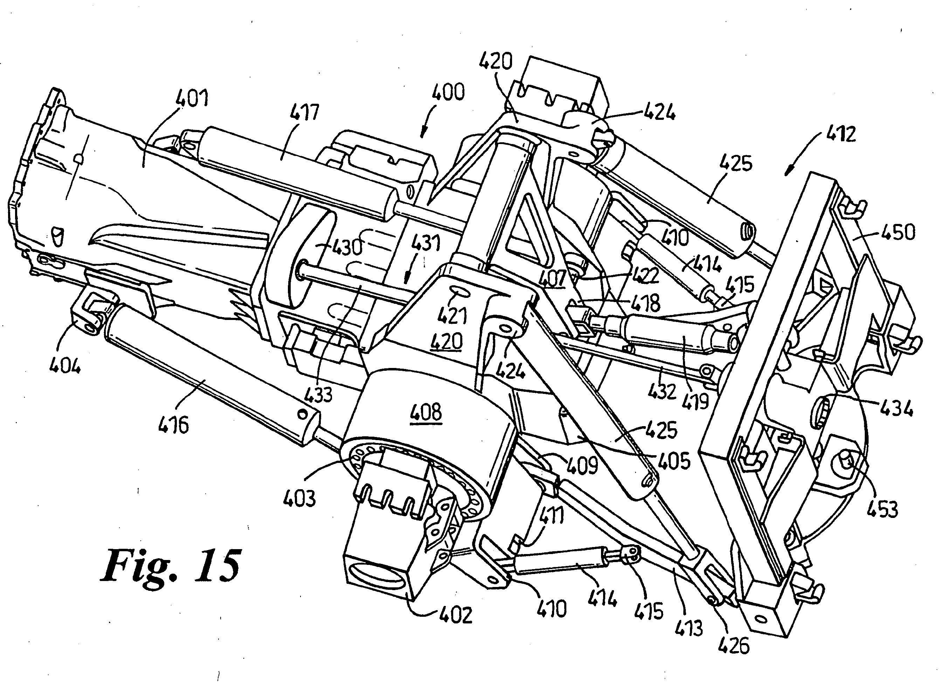

The attachment member 101 includes a first pair of lobes (hidden in the Figures) arranged in line with the rotatable member 100 for receiving a lower link member 12, and a second pair of lobes 106 spaced apart from said first pair of lobes. The second pair of lobes 106 are mounted on a leg 108 extending outwardly from said rotatable member (see Figure 15). A stabilizer 107 extends between the second pair of lobes 106 and the lower link 12. The function of a stabilizer in a three point hitch is well known to those skilled in the art, and therefore will not be described in detail. However, in this invention, the stabilizer 107 may be a linear actuator, controllable remotely. Such a linear actuator allows the position of the lower link 12 to be manipulated in order to facilitate connection of an implement to the hitch.

Referring again to the attachment member 102, a hydraulic ram 109 consisting of a piston and cylinder 110 extends between a mounting point 112 on the transaxle casing 2 and said attachment member 102. The free end of the piston 111 is attached to the lobes 105 of said attachment member 102 by means of a pin. The free end of the cylinder 110 is attached to the mounting point 112 by means of a pin.

The lower link 12 is attached to the transaxle casing by attachment to the rotatable member 100 and to pillars 4 by means of a hydraulic ram 13.

It will therefore be apparent to the reader that movement of the lower link member 12 in the longitudinal direction of the transaxle casing 2 is achieved by extension and retraction of the hydraulic ram 109.

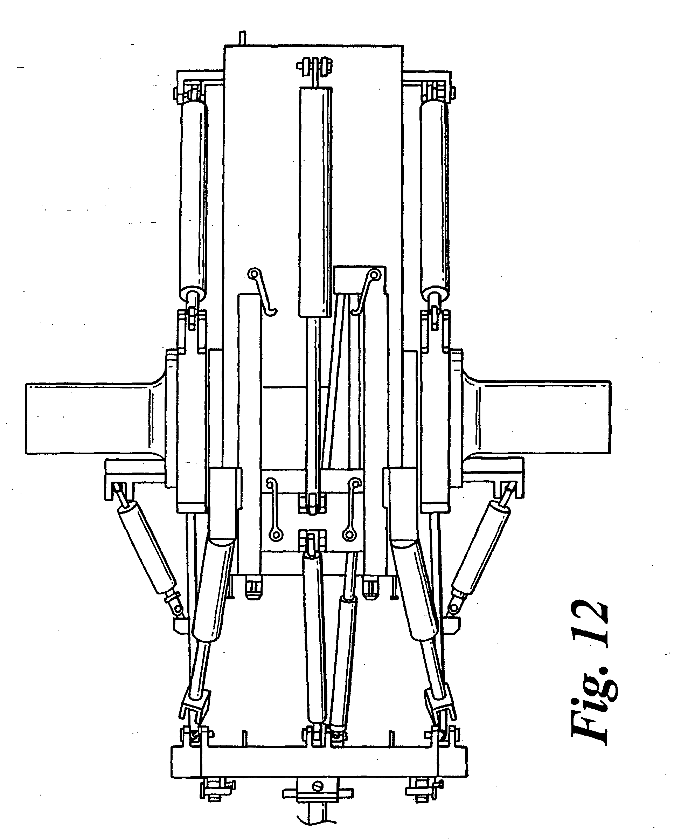

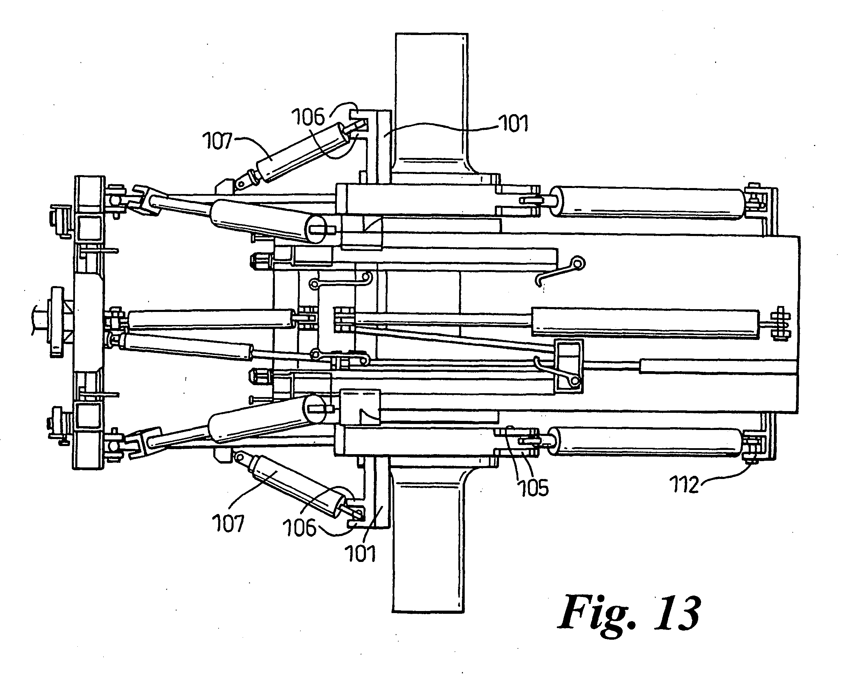

It can be seen from Figure 10 that by retracting the piston 111 into cylinder 110, rotatable member 100 is caused to rotate clockwise about final drive housing 3 thereby moving the lower link to the left and into the position shown in Figures 12 and 13.

The difference between the embodiments shown in Figures 10 to 13, and the embodiments shown in Figures 1 to 7, is that in the embodiments shown in Figures 10 to 13 each lower link 12 can be moved back and forth independently of the other, thereby facilitating attachment of an implement to the tractor.

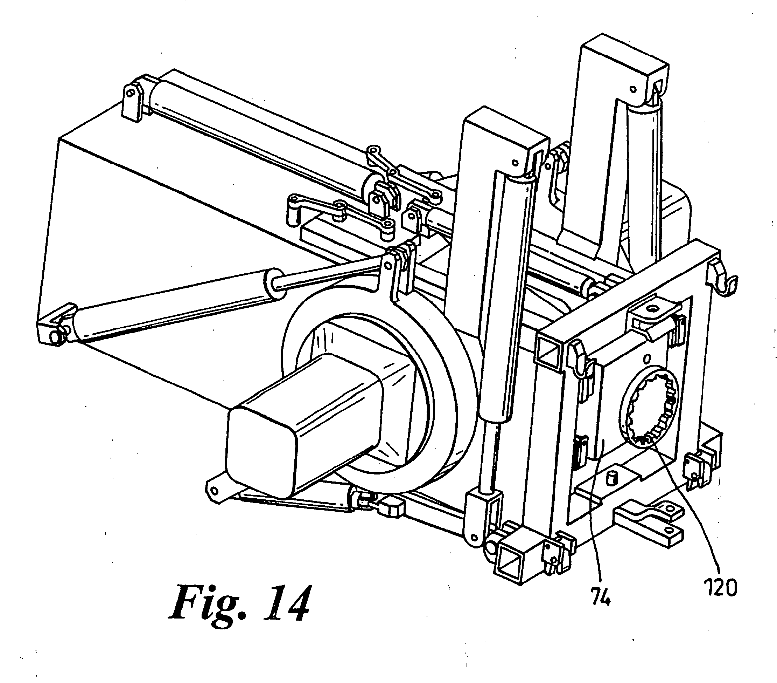

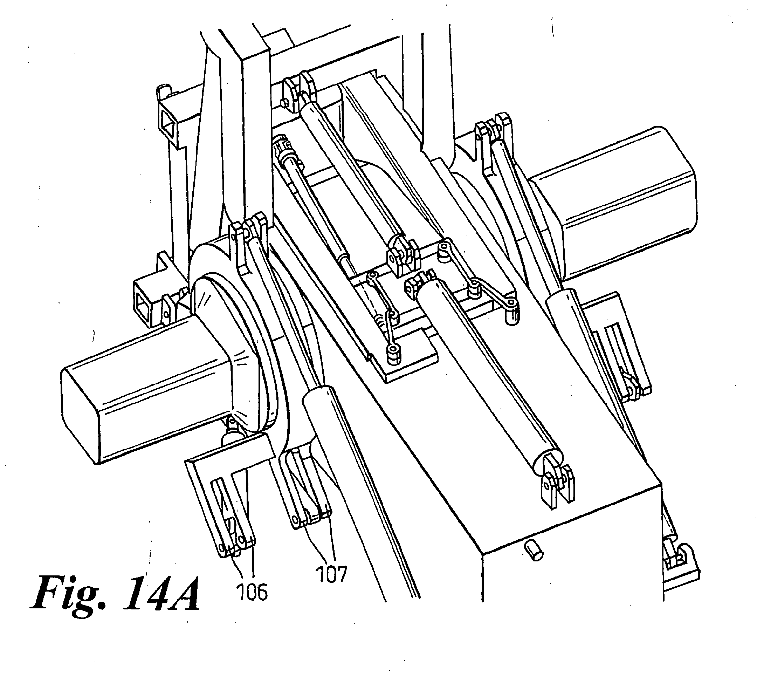

With reference to Figure 14, the power take off stub-shaft 73 shown in Figure 7 is replaced with half of a dog clutch. An implement requiring power from the power take off is provided with the corresponding half of the dog clutch, thereby permitting the transfer of power from the tractor to the implement. This arrangement makes for a simpler connection of the tractor to the implement.

Referring now to Figure 15, there is shown a transaxle 400 comprising a transmission casing 401 and a rear axle including a half-shaft housing 402. The half-shaft housing 402 comprises final drive housing 403. Lower link mounting members 408 are mounted on the final drive housings 403 such that the mounting members 408 are rotatable on the said housing 403. The lower link mounting members 408 include three bifurcated brackets 409, 410, 411.

The first bracket 409 mounts a lower link 413 of a three point hitch 412. The bracket 410 mounts a stabilizer 414, of similar type to stabilizer 107, extending between the bracket 410 of the mounting member 408 and a bracket 415 mounted on the lower link 413.

The bracket 411 mounts one end of a hydraulic actuator 416, the other end of the hydraulic actuator 416 being attached to bracket 404 fixed to the transmission housing 401.

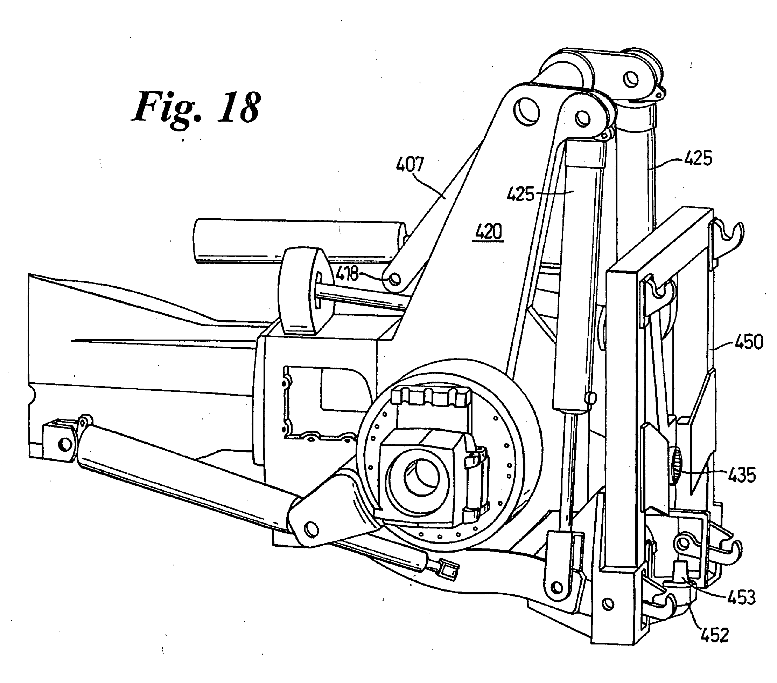

Retraction and extension of the actuator 416 moves the lower links 413 between the position shown in Figure 18, where the lower link and attached hitch frame 410 are retracted and the position shown in Figure 9, where the lower links 413 are extended. Each actuator 416 may be activated independently of the other thereby allowing fine adjustment of the lower link position with respect to any implement to be attached to the linkage. This facilitates attachment of an implement to the linkage.

Attached to the transmission casing 401 is a lift mechanism comprising a pair of spaced apart pillars 420 fixed to the transmission casing 401 one pillar being mounted on each side of the transmission casing 401. The pillars 420 include attachment brackets 424 to each of which one end of a hydraulic actuator 425 is attached. Each hydraulic actuator 425 extend between a respective lower link 413 and an attachment bracket 424, the hydraulic actuator 425 being attached to the lower links 413 by a pin 426.

Extension and retraction of the hydraulic rams 425 lowers and raises lower links 413. In Figure 18 the hitch frame 450 is in a retracted position and shown the hydraulic rams 425 are set to a partially extended position.

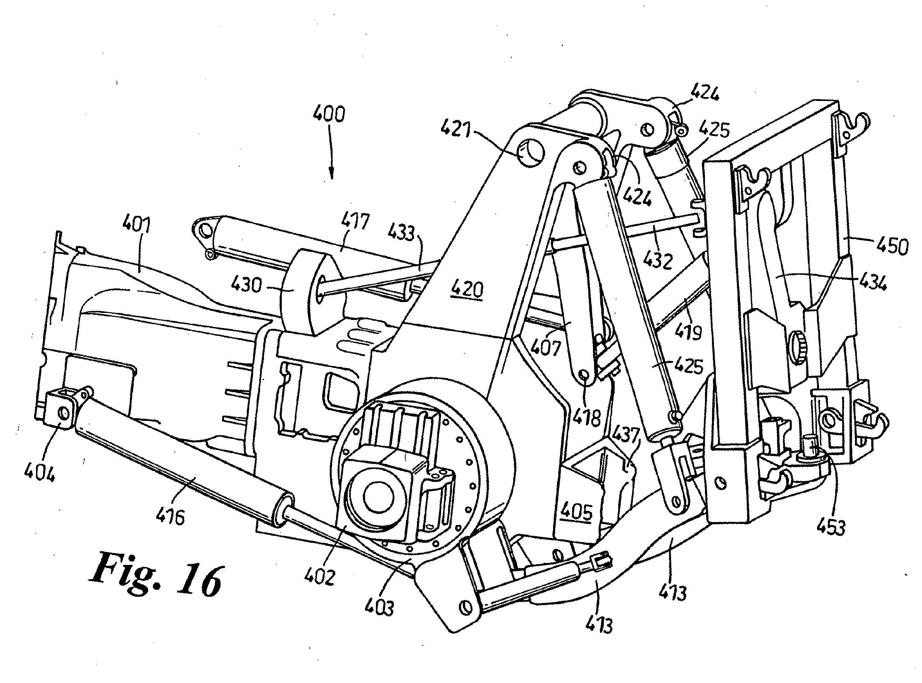

A top link mounting arrangement comprises a swing arm 407 rotatably mounted on a shaft 421 which shaft extends between the spaced apart pillars. The swing arm 407 comprises a bifurcated bracket 418 at its free end. In Figures 15 to 18, one end of a top link 419 is attached to bracket 418 of the swing arm. Extension and retraction of the hydraulic actuator 417 changes the position of the top link 419 relative to the transmission casing 401.

In Figure 18 the hydraulic actuator 417 is full retracted, and the hitch frame 450 is in its retracted position.

The transmission casing 401 further mounts a power-take-off (PTO) drive 430, which transmits power via PTO shaft 431 to a PTO final drive 434. The PTO final drive 434 includes an output shaft 43 5.

In the position shown in Figures 15 to 18, the final drive 434 is located in the hitch frame 450. The final drive 434 includes a first set of four pins, which locate in 'U' shaped recesses in the hitch frame 450. The final drive 434 include a second set of four pins 436 located parallel to but spaced apart from the first set of pins 436. The second set of pins locates in U-shaped recesses 437 in the bracket 405.

In Figure 18, with the hitch frame 450 retracted, both the first and second set of pins 436 are located in their respective U-shaped recesses 437 in the hitch frame 450 and bracket 405 respectively.

Referring to Figure 15, the PTO shaft 431 comprises half-shafts 432, 433, the half-shaft 432 sliding within the half-shaft 433. The PTO shaft 431 is attached to the PTO drive and PTO final drive by universal joints which allow for vertical and lateral movement of the final drive 434, when mounted in the hitch frame 450, with respect to the transaxle 400.

The hitch frame 450 is a quick hitch frame and includes four quick hitch brackets 451 for attachment of the frame to implements. The hitch frame 450 is also provided with means to allow it to function as a drawbar.

The hitch frame 450 mounts a drawbar assembly comprising a rotatable member 452 which has attached thereto a pintle 453, and clevis hook 454. In Figures 15 to 18 the pintle 453 is in the working position. To move the clevis hook 454 into the working position the rotatable member 452 is simply rotated to the right so that the clevis 454 takes up the position occupied by the pintle 453 in Figures 15 to 18. Suitable locking means are provided to lock the clevis hook 454 into the towing position. Such locking means are well known and therefore not described in detail.

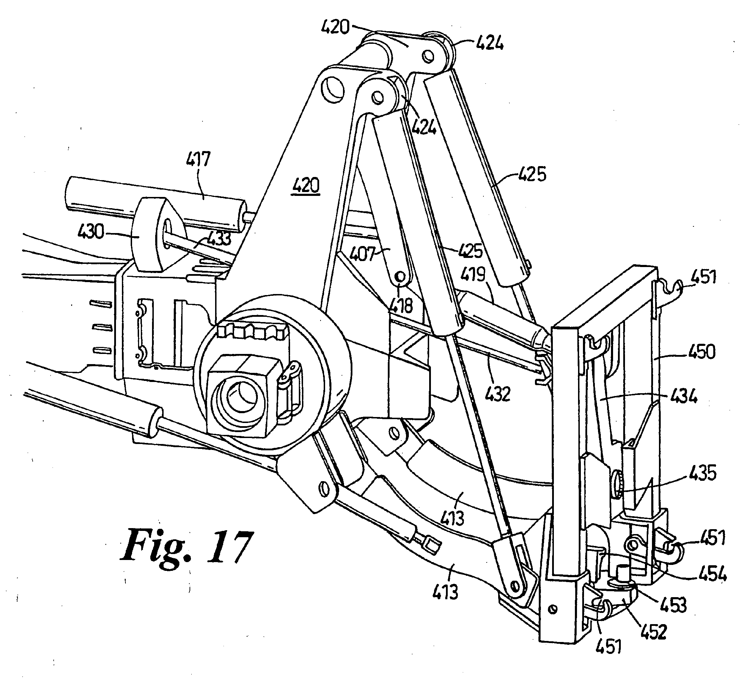

The rotatable member 452 also mounts a retaining means 455 which is associated with the pintle 453. In use, when the pintle is located in the eye of a drawbar, the retaining means 455 is rotated from the position shown in Figure 17, through 90 degrees such that the free end thereof is located above the pintle. The retaining means may be locked in this position, thereby locking the eye of a drawbar in position on the pintle 453, removing any possibility for the implement of which the drawbar forms a part, becoming detached from the hitch frame 450.

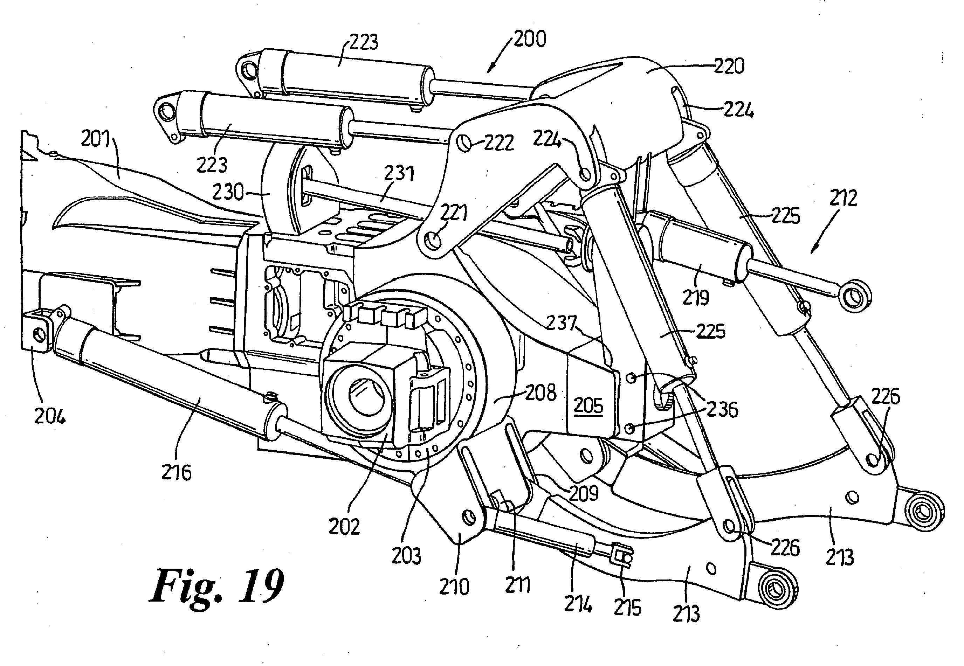

Referring now to Figure 19, there is shown a transaxle 200 comprising a transmission casing 201 and a rear axle including a half-shaft housing 202. The half-shaft housing 202 comprises final drive housing 203. Lower link mounting members 208 are mounted on the final drive housings 203 such that the mounting members 208 are rotatable on the said housing 203. The lower link mounting members 208 include three bifurcated brackets 209, 210, 211.

The first bracket 209 mounts a lower link 213 of a three point hitch 212. The bracket 210 mounts a stabilizer 214, of similar type to stabilizer 107, extending between the bracket 210 of the mounting member 208 and a bracket 215 mounted on the lower link 213.

The bracket 211 mounts one end of a hydraulic actuator 216, the other end of the hydraulic actuator 216 being attached to bracket 204 fixed to the transmission housing 201.

Retraction and extension of the actuator 216 moves the lower links 213 between the position shown in Figure 12, where the lower link and attached hitch frame 250 are retracted and the position shown in Figure 9, where the lower link 213 are extended. Each actuator 216 may be activated independently of the other thereby allowing fine adjustment of the lower link position with respect to any implement to be attached to the linkage. This facilitates attachment of an implement to the linkage.

Attached to the transmission casing 201 is a lift mechanism comprising a lift arm 220 pivotally attached to the transmission casing 201 at spaced apart mounting points 221 located on opposing side of the transmission casing 201. The lift arms include first attachment brackets 222 to each of which one end of a hydraulic actuator 223 is attached. The lift arms further include second attachment brackets 224. Hydraulic actuators 225 extend between a respective lower link 213 and a second attachment bracket 224, the hydraulic actuator 225 being attached to the lower links 213 by pins 226.

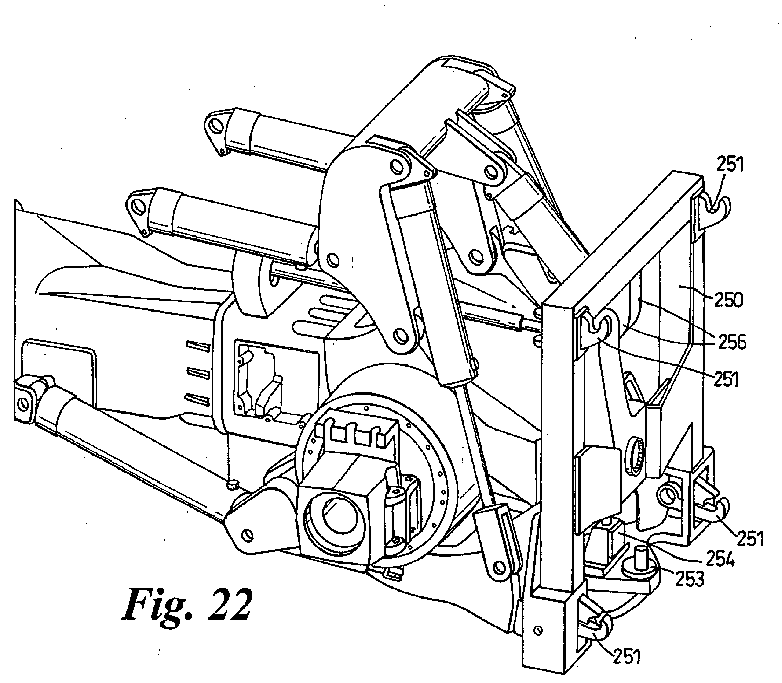

Extension and retraction of the hydraulic rams 223 moves the lift arm 220 through an arc and hence lowers and raises lower links 213. When it is decided to move a hitch frame 250 attached to the lower links 213 and top link 219, into the retracted position as shown in Figure 22, it is necessary to retract the hydraulic rams 223.

In Figure 22 the hydraulic actuator 219 is full retracted, and the hitch frame 250 is in its retracted position.

The lift arm 220 further comprises a link mounting bracket 217 comprising two spaced apart plates 218, each of which includes an aperture. The apertures are aligned so that a pin can be passed through said aperture and an aligned aperture of the top link member 219, thereby attaching the top link 219 to the top link bracket 217.

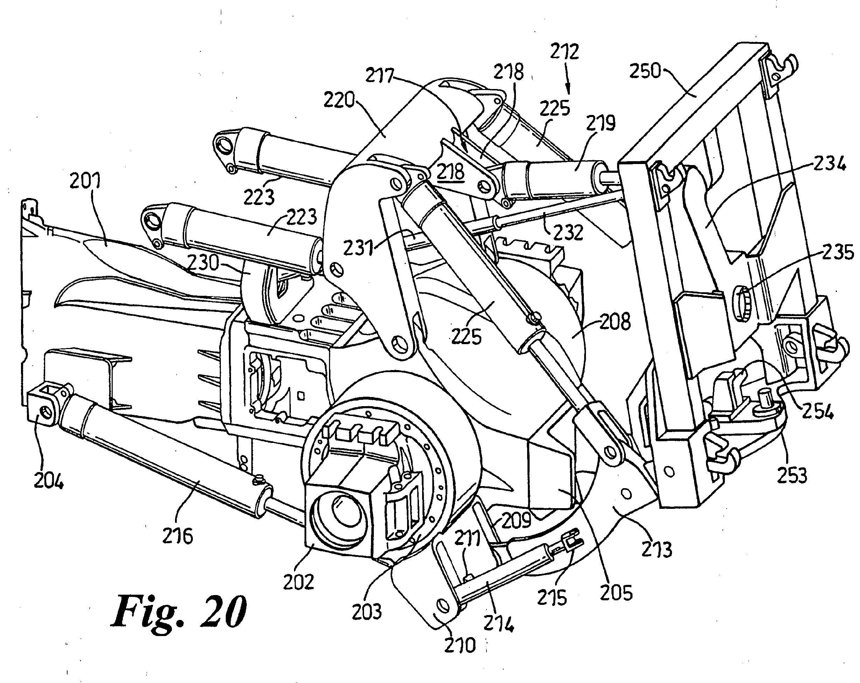

As can be seen from Figures 19 to 22, the top link bracket moves with the lift arm 220, and it is therefore necessary for the top link to be telescopic so that its length can be adjusted to compensate for changes in position of the top link mounting bracket 217 relative to the transmission casing 201.

The transmission casing 201 further mounts a power-take-off (PTO) drive 230, which transmits power via PTO shaft 231 to a PTO final drive 234. The PTO final drive 234 includes an output shaft 235.

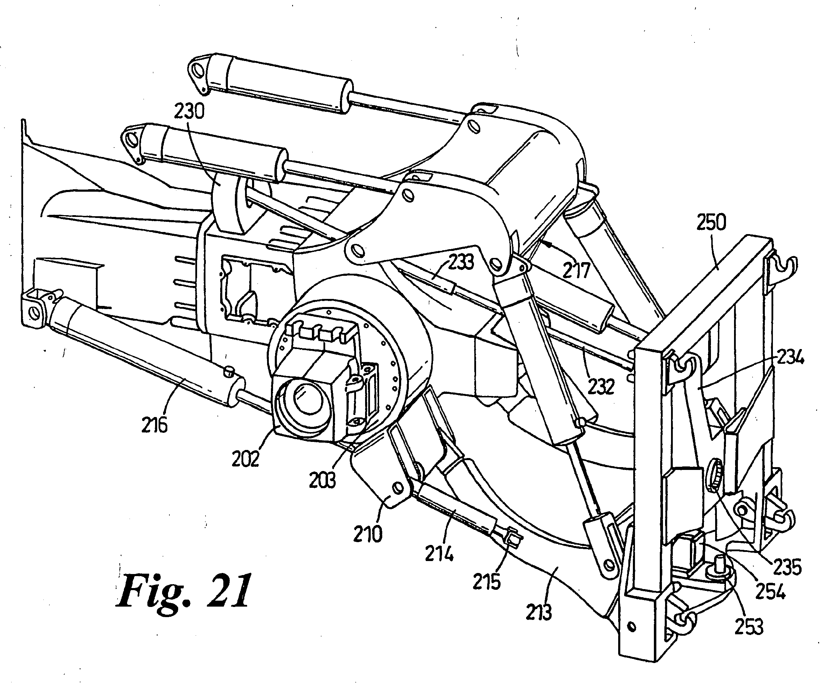

The PTO final drive 234 can be located in one of two positions. In the position shown in Figure 19 the final drive 234 is located in a bracket 205 of the transaxle 200. In the position shown in Figure 21, the final drive 234 is located in the hitch frame 250. The final drive 234 includes a first set of four pins 236 (of which two are shown), which locate in 'U' shaped recesses in the hitch frame 250. The final drive 234 include a second set of four pins 236 located parallel to but spaced apart from the first set of pins 236. The second set of pins are obscured, but located in U-shaped recesses 237 in the bracket 205.

In Figure 22, with the hitch frame 250 retracted, both the first and second set of pins 236 are located in their respective U-shaped recesses 237 in the hitch frame 250 and bracket 205 respectively.

Referring to Figure 21, the shaft 231 comprises half-shafts 232, 233, the half-shaft 232 sliding within the half-shaft 233. The PTO shaft 231 is attached to the PTO drive and PTO final drive by universal joints which allow for vertical and lateral movement of the final drive 234, with respect to the transaxle 200, when mounted in the hitch frame 250

The hitch frame 250 is a quick hitch frame and includes four quick hitch brackets 251 for attachment of the frame to implements. The hitch frame 250 is also provided with means to allow it to function as a drawbar.

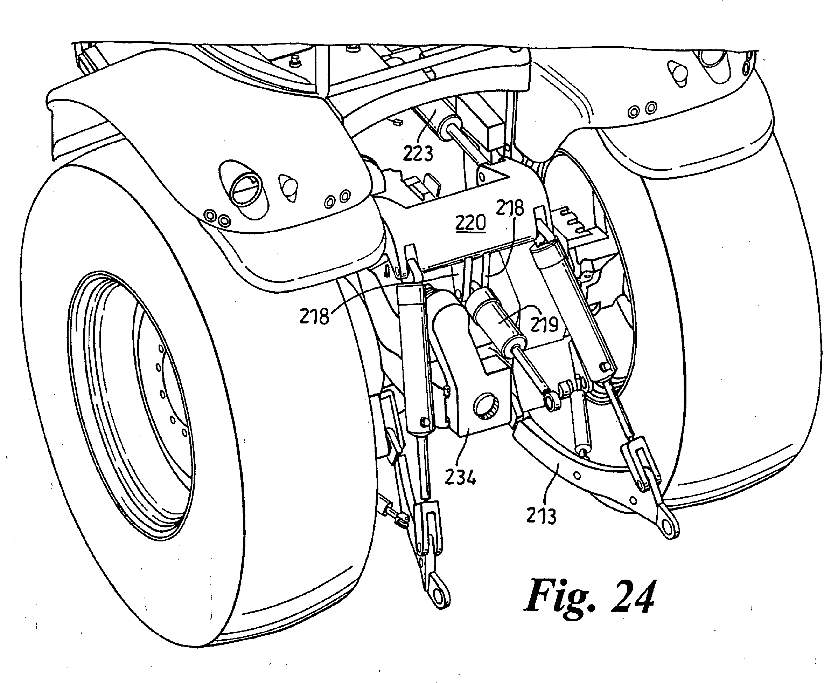

The hitch frame 250 mounts a drawbar assembly comprising a rotatable member 252 which has attached thereto a pintle 253, and clevis hook 254. In Figures 19 to 24 the pintle 253 is in the working position. To move the clevis hook 254 into the working position the rotatable member 252 is simply rotated to the right so that the clevis 254 takes up the position occupied by the pintle 253 in Figures 19 to 24. Suitable locking means are provided to lock the clevis hook 254 into the towing position. Such locking means are well known and therefore not described in detail.

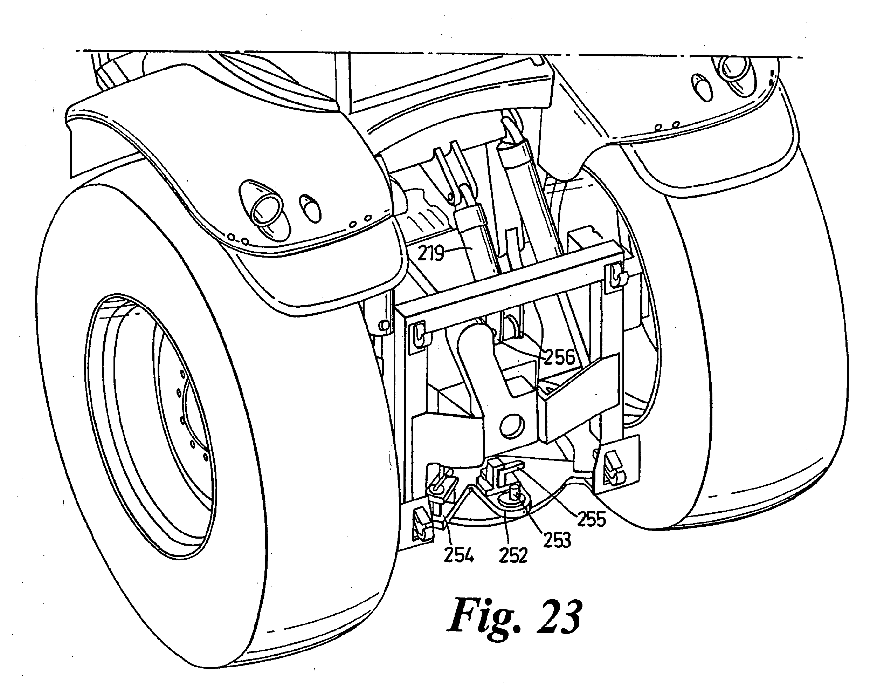

The rotatable member 252 also mounts a retaining means 255 which is associated with the pintle 253. In use, when the pintle is located in the eye of a drawbar, the retaining means 255 is rotated from the position shown in Figure 23, through 90 degrees such that the free end thereof is located above the pintle. The retaining means may be locked in this position, thereby locking the eye of a drawbar in position on the pintle 253, removing any possibility for the implement of which the drawbar forms a part, becoming detached from the hitch frame 250.

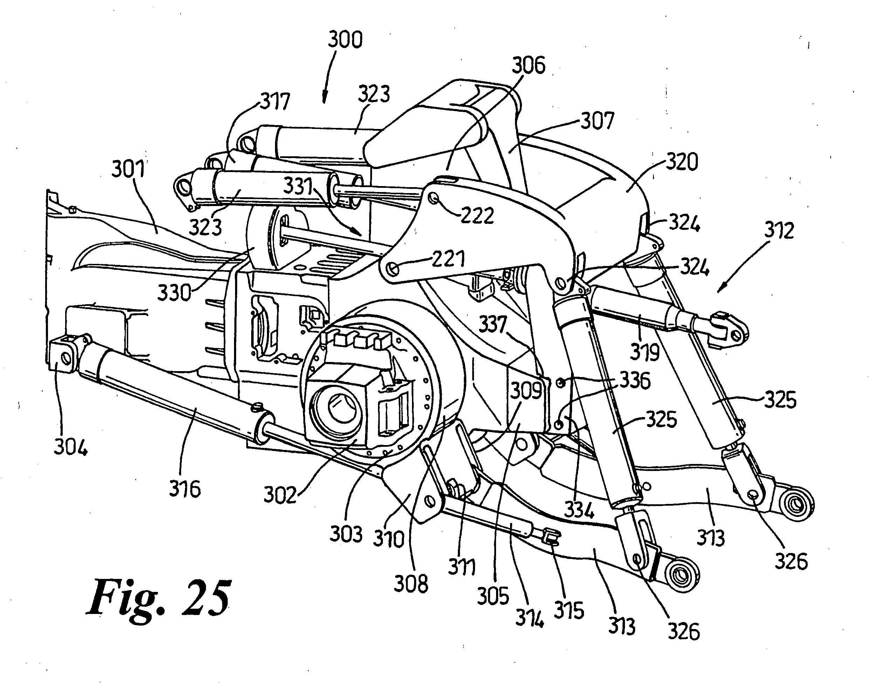

Referring now to Figure 25, there is shown a transaxle 300 comprising a transmission casing 301 and a rear axle including a half shaft housing 302. The half-shaft housing 302 comprises final drive housing 303. Lower link mounting members 308 are mounted on the final drive housings 303 such that the mounting members 308 are rotatable on the said housing 303. The lower link mounting members 308 include three bifurcated brackets 309, 310, 311.

The first bracket 309 mounts a lower link 313 of a three point hitch 312. The bracket 310 mounts a stabilizer 314, of similar type to stabilizer 107, extending between the bracket 310 of the mounting member 308 and a bracket 315 mounted on the lower link 313.

The bracket 311 mounts one end of a hydraulic actuator 316, the other end of the hydraulic actuator 316 being attached to bracket 304 fixed to the transmission housing 301.

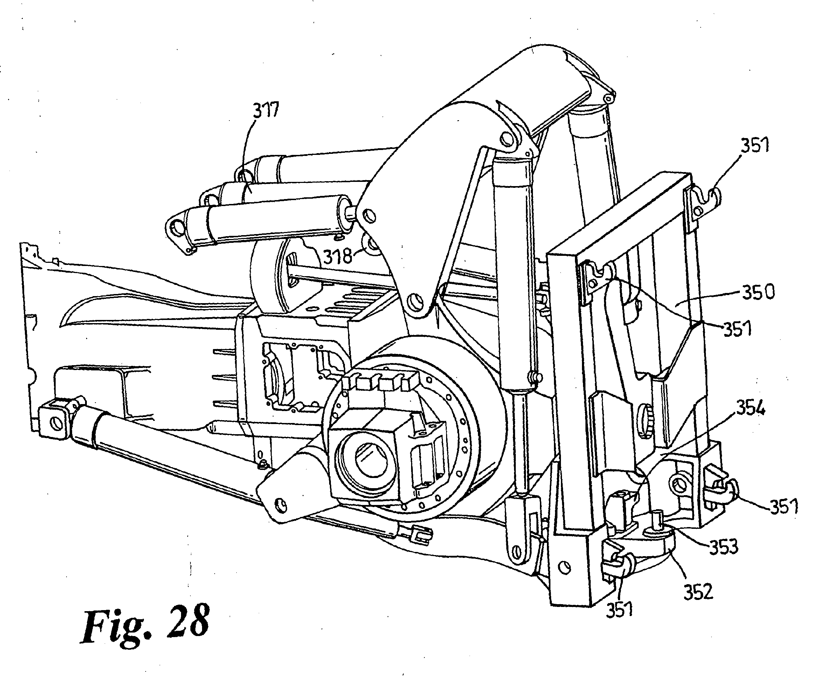

Retraction and extension of the actuator 316 moves the lower links 313 between the position shown in Figure 28, where the lower link and attached hitch frame 310 are retracted and the position shown in Figure 25, where the lower link 313 are extended. Each actuator 316 may be activated_independently of the other thereby allowing fine adjustment of the lower link position with respect to any implement to be attached to the linkage. This facilitates attachment of an implement to the linkage.

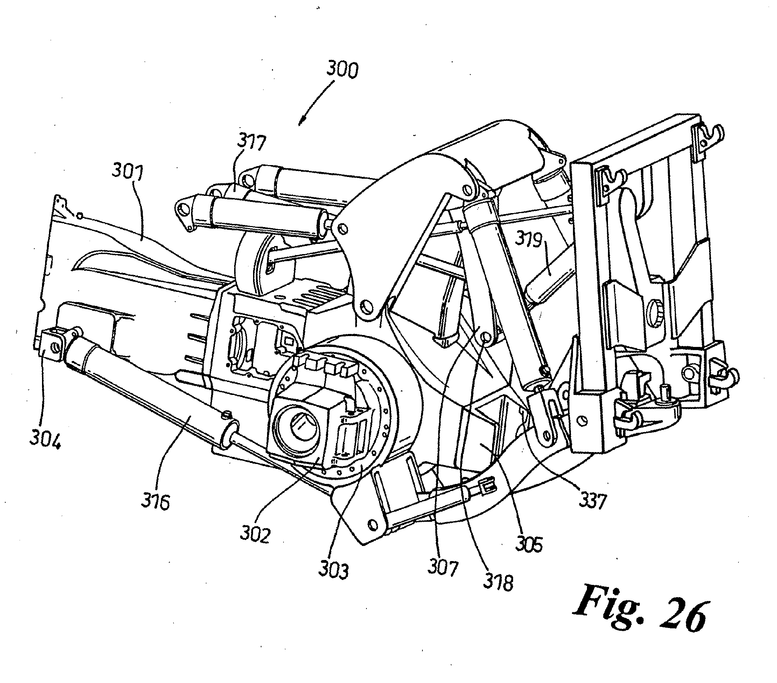

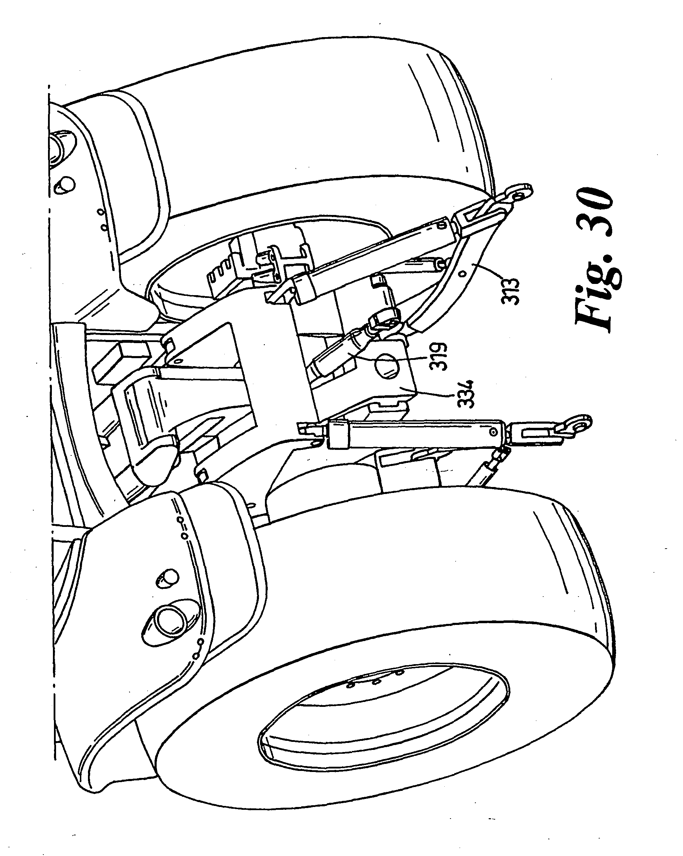

The transaxle 300 includes a top link mounting arrangement comprising pillar 306, a swing arm 307 rotatably attached to the pillar 306, and a hydraulic actuator 317. The swing arm 307 comprises a bifurcated bracket 318 at its free end. In Figures 25 to 30, one end of a top link 319 is attached to bracket 318 of the swing arm. Extension and retraction of the hydraulic actuator 317 changes the position of the top link 319.

In Figure 28 the hydraulic actuator 317 is full retracted, and the hitch frame 350 is in its retracted position.

Attached to the transmission casing 301 is a lift mechanism comprising a lift arm 320 pivotally attached to the transmission casing 301 at spaced apart mounting points 321 located on opposing side of the transmission casing 301. The lift arms include first attachment brackets 322 to each of which one end of a hydraulic actuator 323 is attached. The lift arms further include second attachment brackets 324. Hydraulic actuators 325 extend between a respective lower link 313 and a second attachment bracket 324, the hydraulic actuator 325 being attached to the lower links 313 by pins 326.

Extension and retraction of the hydraulic rams 323 moves the lift arm 320 through an arc and hence lowers and raises lower links 313. When it is decided to move a hitch frame 350 attached to the lower links 313 and top link 319, into the retracted position as shown in Figure 28, it is necessary to retract the hydraulic rams 323.

The transmission casing 301 further mounts a power-take-off (PTO) drive 330, which transmits power via PTO shaft 331 to a PTO final drive 334. The PTO final drive 334 includes an output shaft 335.

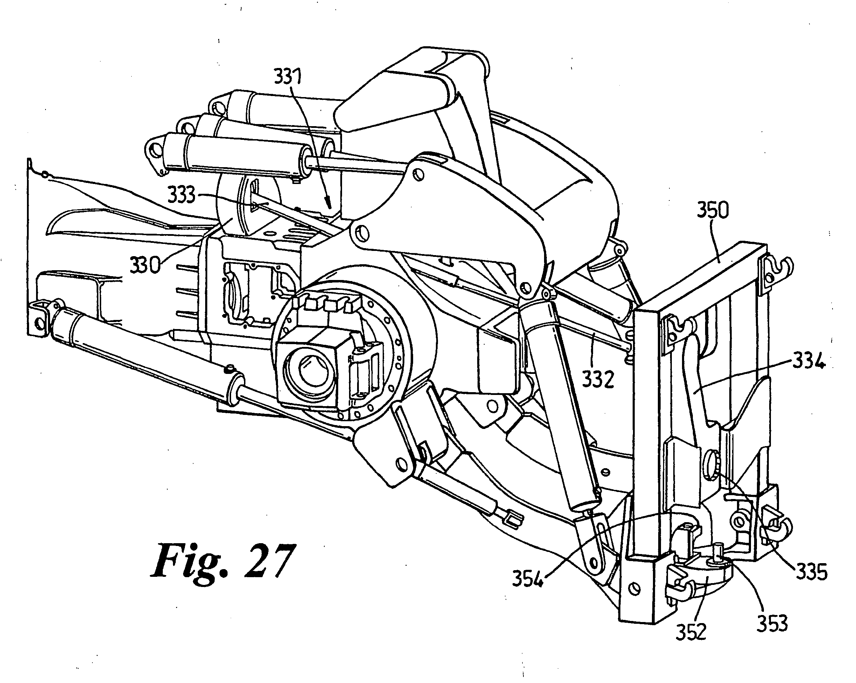

The PTO final drive 334 can be located in one of two positions. In the position shown in Figure 25 the final drive 334 is located in a bracket 305 of the transaxle 300. In the position shown in Figure 27, the final drive 334 is located in the hitch frame 350. The final drive 334 includes a first set of four pins 336 (of which two are shown), which locate in 'U' shaped recesses in the hitch frame 350. The final drive 334 include a second set of four pins 336 located parallel to but spaced apart from the first set of pins 336. The second set of pins are obscured, but located in U-shaped recesses 337 in the bracket 305.

In Figure 28, with the hitch frame 350 retracted, both the first and second set of pins 336 are located in their respective U-shaped recesses 337 in the hitch frame 350 and bracket 305 respectively.

Referring to Figure 27, the shaft 331 comprises half-shafts 332, 333, the half-shaft 332 sliding within the half-shaft 333. The PTO shaft 331 is attached to the PTO drive and PTO final drive by universal joints which allow for vertical and lateral movement of the final drive 334, when mounted in the hitch frame 350, with respect to the transaxle 300.

The hitch frame 350 is a quick hitch frame and includes four quick hitch brackets 351 for attachment of the frame to implements. The hitch frame 350 is also provided with means to allow it to function as a drawbar.

The hitch frame 350 mounts a drawbar assembly comprising a rotatable member 352 which has attached thereto a pintle 353, and clevis hook 354. In Figures 25 to 30 the pintle 353 is in the working position. To move the clevis hook 354 into the working position the rotatable member 352 is simply rotated to the right so that the clevis 354 takes up the position occupied by the pintle 353 in Figures 25 to 30. Suitable locking means are provided to lock the clevis hook 354 into the towing position. Such locking means are well known and therefore not described in detail.

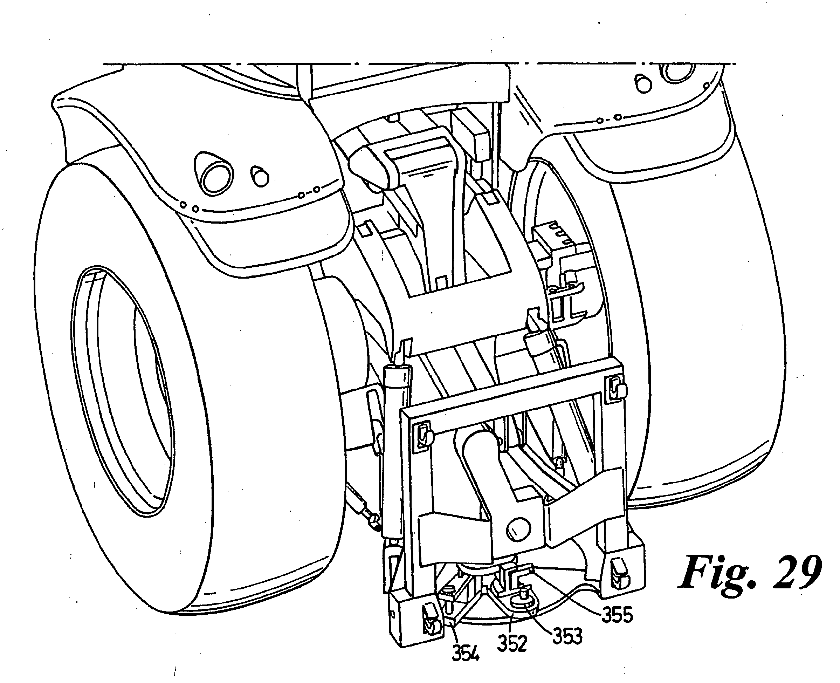

The rotatable member 352 also mounts a retaining means 355 which is associated with the pintle 353. In use, when the pintle is located in the eye of a drawbar, the retaining means 355 is rotated from the position shown in Figure 29, through 90 degrees such that the free end thereof is located above the pintle. The retaining means may be locked in this position, thereby locking the eye of a drawbar in position on the pintle 353, removing any possibility for the implement of which the drawbar forms a part, becoming detached from the hitch frame 350.

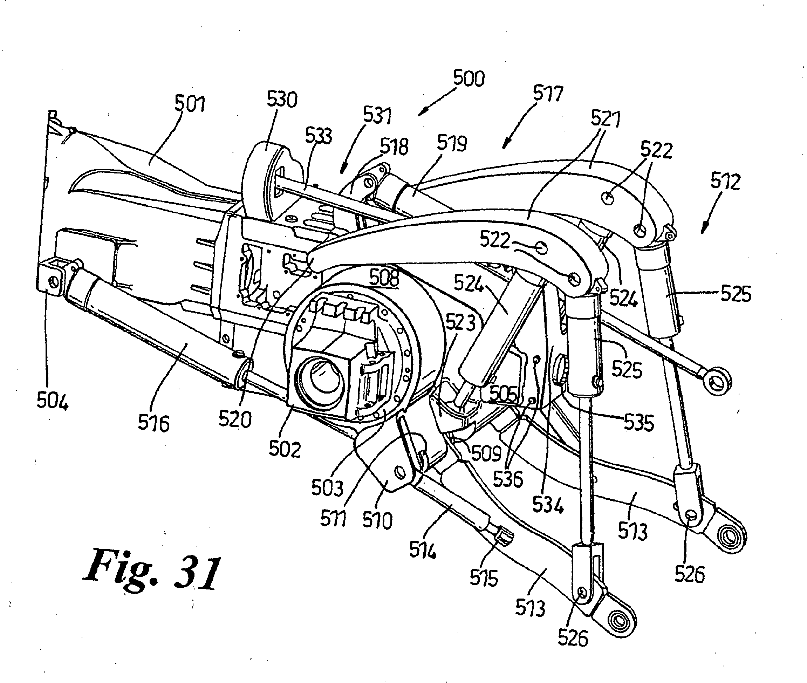

Referring now to Figure 31, there is shown a transaxle 500 comprising a transmission casing 501 and a rear axle including a half-shaft housing 502. The half-shaft housing 502 comprises final drive housing 503. Lower link mounting members 508 are mounted on the final drive housings 503 such that the mounting members 508 are rotatable on the said housing 503. The lower link mounting members 508 include three bifurcated brackets 509, 510, 511.

The first bracket 509 mounts a lower link 513 of a three point hitch 512. The bracket 510 mounts a stabilizer 514, of similar type to stabilizer 107, extending between the bracket 510 of the mounting member 508 and a bracket 515 mounted on the lower link 513. The stabilizer 514 may comprise a hydraulic cylinder, which can be extended and retracted to adjust the position of the lower link 513.

The bracket 511 mounts one end of a hydraulic actuator 516, the other end of the hydraulic actuator 516 being attached to bracket 504 fixed to the transmission housing 501.

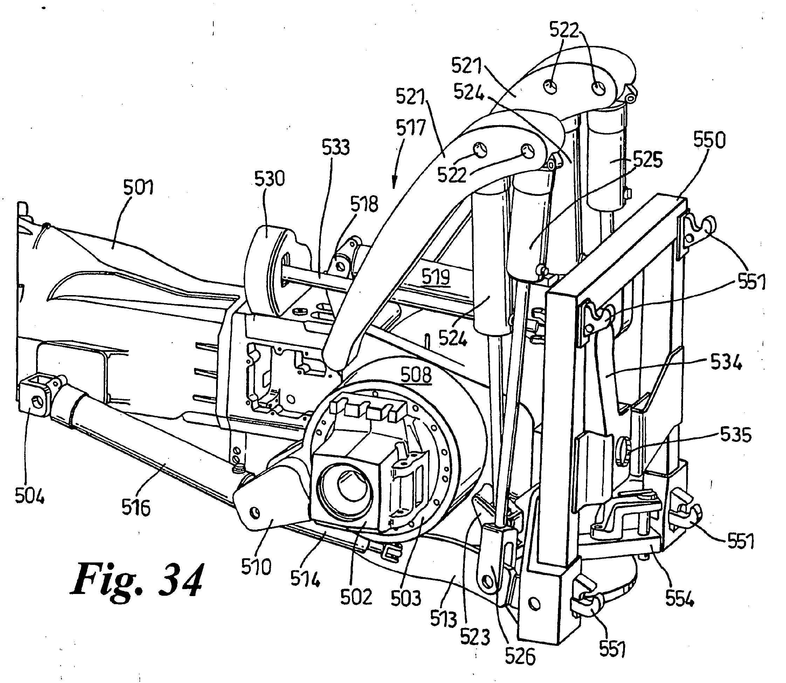

Retraction and extension of the actuator 516 moves the lower links 513 between the position shown in Figure 34, where the lower link and attached hitch frame 510 are retracted and the position shown in Figure 31, where the lower link 513 are extended. Each actuator 516 may be activated independently of the other thereby allowing fine adjustment of the lower link position with respect to any implement to be attached to the linkage. This facilitates attachment of an implement to the linkage.

The transaxle 500 includes a lift assembly 517 comprising a cross-shaft 520 which passes through the suitably located bores in the transmission housing 501, and at each of its free ends mounts a lift arm 521. Each lift arm is securely fixed to one of the said free ends of the cross-shaft 520. The cross shaft also mounts top link attachment bracket comprising a bifurcated bracket 518 including apertures through which a pin may be passed to attach one end of a top link 519 thereto.

At the end of each lift arm 521 remote from the cross-shaft 520 there are located two bores 522. One end of a first hydraulic cylinder 524 is attached to one of the bores 522 by a suitable attachment member, such as a pin. The other end of the first hydraulic cylinder 524 is attached to a bracket 523, which in the example is part of the transmission housing casting 501.

One end of second hydraulic cylinder 525 is attached to the other bore 522, the other end being attached to lower link 513 by means of a bifurcated bracket 526 and a suitable attachment member, such as a pin.

In use, the first hydraulic cylinders 524 function as lift cylinders. Extending the hydraulic cylinders 524 lifts the lift arms 521 and hence the lower links 513. The purpose of the second hydraulic cylinders 525 is to adjust the position of the lower links during attachment of an implement to the linkage 512. When the implement is attached to the lower links, the second hydraulic cylinders 525 are locked in their end stroke positions, and all raising lowering of the linkage 512 is achieved by adjustment of the first hydraulic cylinders 524.

One of the hydraulic cylinders 525 may be a double acting hydraulic cylinder, or be provided with other suitable means for adjusting the length of the said one hydraulic cylinder 525 relative to the other hydraulic cylinder 525. This function provides for levelling of an implement attached to the hitch.

By connecting the two lift arms 521 by a cross-shaft, synchronization of the position of hydraulic cylinders 524 can easily be achieved, with both of the cylinders being supplied with pressurized hydraulic fluid through a common valve. Absent a mechanical connection between the lift arms 521, a more complex arrangement of hydraulic circuitry would be required to synchronize the extension of the hydraulic cylinders 524.

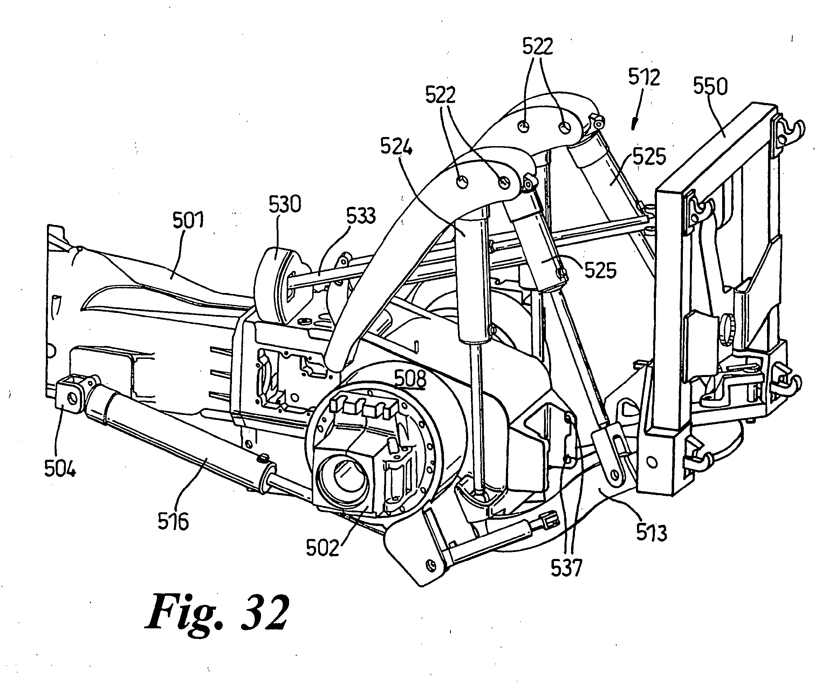

In Figure 32, the linkage is shown in the extended and raised position, with the hitch frame 550 attached thereto. In this configuration, the hydraulic cylinders 525 are fully extended and locked in that position, and therefore it is the hydraulic cylinders 524 which are in control of lifting the linkage 512.

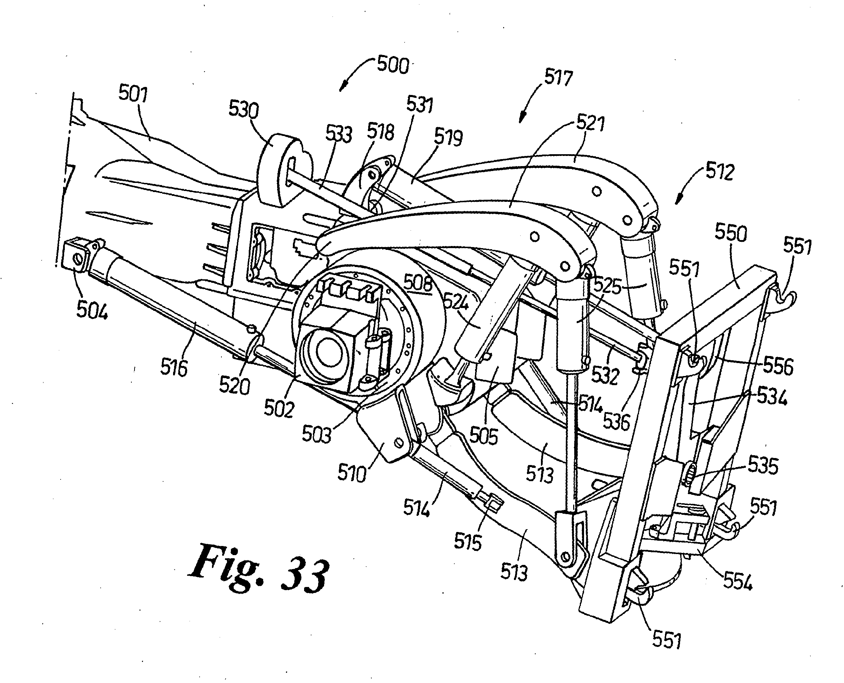

In Figures 31 and 33, the linkage is shown in the extended and lowered position, which is achieved by removing hydraulic fluid from the hydraulic cylinders 524.

The top link attachment bracket 518 is fixed on the cross-shaft 520. By viewing Figures 31 and 32, it can be seen that as the linkage 512 is raised, the position of the attachment point of the top link 519 to the top link attachment bracket 518 changes, i.e. it moves towards the PTO drive 530. In order to correct for this change in distance, which changes the pitch of the hitch frame 550 and any implement attached thereto, or any implement attached directly to the linkage 512, the top link 519 is comprised of a hydraulic cylinder. The hydraulic cylinder is extended and retracted both to compensate for changes in position of the top link bracket 518, and to facilitate attachment of implements to the hitch frame 550, or directly to the linkage 512.

In Figure 34 the linkage is fully retracted, and the hitch frame 550 is in its retracted and raised position. This is achieved by retracting the hydraulic cylinders 516, thereby rotating the mounting members 508 and moving the attachment points of the lower links 513 relative to the transmission housing 501. All of the hydraulic cylinders 524 and 525 are in their positions of maximum extension. The hydraulic cylinder 519 is in its fully retracted position.

The transmission casing 501 further mounts a power-take-off (PTO) drive 530, which transmits power via PTO shaft 531 to a PTO final drive 534. The PTO final drive 534 includes an output shaft 535.

The PTO final drive 534 can be located in one of two positions. In the position shown in Figure 31 the final drive 534 is located in a bracket 505 of the transaxle 500. In the position shown in Figure 33, the final drive 534 is located in the hitch frame 550. The final drive 534 includes a first set of four pins 536 (of which two are shown), which locate in 'U' shaped recesses in the hitch frame 550. The final drive 534 includes a second set of four pins 536 located parallel to but spaced apart from the first set of pins 536. The second set of pins are obscured, but located in U-shaped recesses 537 in the bracket 505, see Figure 32.

In Figure 34, with the hitch frame 550 retracted, both the first and second set of pins 536 are located in their respective U-shaped recesses 537 in the hitch frame 550 and bracket 505 respectively.

Referring to Figure 33, the shaft 531 comprises half-shafts 532, 533, the half-shaft 532 sliding within the half-shaft 533. The PTO shaft 531 is attached to the PTO drive 530 and PTO final drive 534 by universal joints 536 which allow for vertical and lateral movement of the final drive 534, when mounted in the hitch frame 550, with respect to the transaxle 500.

The hitch frame 550 is a quick hitch frame and includes four quick hitch brackets 551 for attachment of the frame to implements. The hitch frame 550 is also provided with means to allow it to function as a drawbar.

The hitch frame 550 mounts a drawbar assembly comprising a rotatable member 552 which has attached thereto a clevis hook 554. In Figures 31 to 34 the clevis hook 554 is in a non-working position. To move the clevis hook 554 into the working position the rotatable member 552 is simply rotated to the left so that the clevis 554 takes up a position substantially in line with a longitudinal axis of the transaxle. Suitable locking means are provided to lock the clevis hook 554 into the working position. Such locking means are well known and therefore not described in detail.

## Claims

1. A vehicle comprising:
a chassis (2) having a first end and a second end;
a hitch mounted on the chassis, the hitch comprising a top link mounting member (18), and
at least one lower link mounting member (30), **characterised in that** the or each lower link mounting member (30) is mounted on the chassis (2) for movement between retracted and extended positions, and wherein in the said extended position a free end of a lower link (12) attached at one end thereof to a lower link mounting member (30) extends beyond one of the first and second ends of the chassis (2), and wherein in the retracted position the free end of the lower link (12) is closer to the said one end of the chassis (2) than in the extended position.

2. A vehicle according to Claim 1, wherein in the retracted position the said free end of the lower link is substantially adjacent with the said one of the first and second ends of the chassis.

3. A vehicle according to Claim 1 or 2, wherein the top link mounting member is mounted on the chassis for movement between retracted and extended positions, and wherein in the said extended position a free end of a top link attached at one end thereof to the top link mounting member extends beyond one of the first and second ends of the chassis, and wherein in the retracted position the free end of the top link is closer to the said one end of the chassis than in the extended position.

4. A vehicle according to Claim 3, wherein in the retracted position the said free end of top link is substantially adjacent with the said one of the first and second ends of the chassis.

5. A vehicle according to any preceding claim, wherein the top link mounting member and the or each lower link mounting member are slid ably mounted on the chassis.

6. A vehicle according to any preceding claim, and further comprising an actuator attached to the top link mounting member and selectively operable to move the said top link mounting member between said retracted and extended positions independently of movement of the/or each lower link mounting member.

7. A vehicle according to any preceding claim, wherein an actuator is attached to at least one lower link mounting member and is selectively operable to move the said link mounting member between said retracted and extended positions.

8. A vehicle according to Claim 6 or 7, wherein said actuator is a hydraulically operated piston and cylinder arrangement.

9. A vehicle according to any preceding claim, comprising a power-take-off, said power-take-off comprising a final drive including an input shaft, output shaft, said final drive being mounted in a housing, which housing is removably mounted on said chassis.

10. A vehicle according to Claim 9, wherein the final drive input shaft is connected to the output of a power take off clutch.

11. A vehicle according to Claim 10, wherein a bearing supporting a power take off clutch input shaft is mounted in a mounting member, and wherein the bearing mounting member is moveable between and securable in first and second positions, wherein in the first position the final drive housing is attached to the chassis, and in the second position the final drive housing is separated from the chassis.

12. A vehicle according to any preceding claim wherein a hitching frame is attached to the free ends of the lower links and the top link.

13. A vehicle according to Claim 12, wherein said frame comprises a final drive mount, and wherein the final drive housing is attachable to said final drive mount.

14. A vehicle according to any preceding claim, wherein top link mounting member is slidably mounted on the chassis.

15. A vehicle according to any preceding claim wherein the or each lower link mounting member is slidably mounted on the chassis.

16. A vehicle according to any of Claims 1 to 14, comprising a pair of lower link mounting members, each lower link mounting member being rotatably mounted with respect to said transaxle casing.

17. A vehicle according to Claim 16, wherein said mounting member comprise an annular ring rotatably mounted on a final drive housing.

18. A vehicle according to any preceding claim, wherein the bearing mounting member is slidably mounted on the chassis.

19. A vehicle according to Claim 18, wherein in said first position the bearing mounting member is secured to the chassis, and in said second position bearing mounting member is secured to the top link mounting member.

20. A vehicle according to Claim 18, wherein with the bearing mounting member in the first position, and the top link mounting member in the retracted position, the top link mounting member is secured to the bearing mounting member.

21. A vehicle according to Claim 9 or 10, wherein the chassis mounts a power take off drive, having an output shaft, said output shaft being connected to the input shaft of the final drive by means of a cardan shaft.

22. A vehicle according to any preceding claim, wherein the top link mounting member comprises an arm, one end of which mounts a top link attachment bracket, and the other end of which is rotatably mounted on at least one pillar fixedly attached to said chassis.

23. A vehicle according to any preceding claim, wherein the chassis mounts a lift arm, and wherein said lift arm is rotatably mounted on said chassis and at least one actuator extends between, and is attached to the chassis and the lift arm, the lift arm providing mountings for lower link connecting members, each lower link connecting member being attachable at one end to a lower link and its other end to the lift arm.

24. A vehicle according to Claim 23, wherein the said lift arm comprises a pair of spaced apart elongate members attached to and extending from a cross-shaft, said cross-shaft being rotatably mounted in the chassis.

25. A vehicle according to Claim 23 or 24, wherein at least one of the lower link connecting members comprises a linear actuator.

26. A vehicle according to one of Claims 23 to 25, wherein the lift arm mounts the top link attachment bracket.

27. A vehicle according to Claim 24, wherein the top link comprises a linear actuator.

28. A vehicle according to any preceding claim, further comprising a stabilizer mounting bracket and a stabilizer extending between said mounting bracket and a lift arm.

29. A vehicle according to Claim 28, wherein the stabilizer is a linear actuator.

30. A vehicle according to Claim 28 or 29, wherein the stabilizer mounting point is mounted on a lower link mounting member.

31. A vehicle according to Claim 12 or 13, wherein the said hitching frame includes a tow hook mount, and a tow hook.

32. A vehicle according to Claim 31, wherein the said tow hook mount is rotatable between at least two positions, and mounts at least one tow hook.

33. A vehicle according to Claim 12 or 13, wherein the hitch frame includes a plurality of implement attachment brackets.

## Patentansprüche

1. Fahrzeug mit:
einem Chassis (2) mit einem ersten Ende und einem zweiten Ende;
einer an dem Chassis befestigten Anhängevorrichtung, wobei die Anhängevorrichtung ein oberes Verbindungs-Befestigungselement (18) und zumindest ein unteres Verbindungs-Befestigungselement (30) besitzt, **dadurch gekennzeichnet, dass** das oder jedes untere Verbindungs-Befestigungselement (30) an dem Chassis (2) montiert ist mit einem Bewegungs-Freiheitsgrad zwischen einer zurückgezogenen und einer erweiterten Position, wobei in der erweiterten Position ein freies Ende einer unteren Verbindung (12), welches an einem Ende an einem unteren Verbindungs-Befestigungselement (30) befestigt ist, sich über das erste oder zweite Ende des Chassis (2) hinaus erstreckt und wobei das freie Ende der unteren Verbindung (12) in der zurückgezogenen Position dichter an dem einen Ende des Chassis (2) als in der erweiterten Position angeordnet ist.

2. Fahrzeug nach Anspruch 1, **dadurch gekennzeichnet, dass** in der zurückgezogenen Position das freie Ende der unteren Verbindung im Wesentlichen benachbart zu dem ersten oder zweiten Ende des Chassis angeordnet ist.

3. Fahrzeug nach Anspruch 1 oder 2, **dadurch gekennzeichnet dass** das obere Verbindungs-Befestigungselement an dem Chassis befestigt ist mit einem Bewegungs-Freiheitsgrad zwischen einer zurückgezogenen und einer erweiterten Position, wobei in der erweiterten Position ein freies Ende einer oberen Verbindung, welche an einem Ende an dem oberen Verbindungs-Befestigungselement befestigt ist, sich über das erste oder zweite Ende des Chassis hinaus erstreckt und wobei in der zurückgezogenen Position das freie Ende der oberen Verbindung dichter an dem einen Ende des Chassis als in der erweiterten Position angeordnet ist.

4. Fahrzeug nach Anspruch 3, **dadurch gekennzeichnet, dass** in der zurückgezogenen Position das freie Ende der oberen Verbindung im Wesentlichen benachbart dem ersten oder zweiten Ende des Chassis angeordnet ist.

5. Fahrzeug nach einem der vorhergehenden Ansprüche, **dadurch gekennzeichnet dass** das obere Verbindungs-Befestigungselement und das oder jedes untere Verbindungs-Befestigungselement gleitend an dem Chassis montiert sind.

6. Fahrzeug nach einem der vorhergehenden Ansprüche, **dadurch gekennzeichnet dass** weiterhin ein Aktuator vorgesehen ist, der an dem oberen Verbindungs-Befestigungselement befestigt ist und selektiv betreibbar ist zum Bewegen des oberen Verbindungs-Befestigungselements zwischen der zurückgezogenen und der erweiterten Position unabhängig von der Bewegung des oder jedes unteren Verbindungs-Befestigungselements.

7. Fahrzeug nach einem der vorhergehenden Ansprüche, **dadurch gekennzeichnet, dass** ein Aktuator an zumindest einem unteren Verbindungs-Befestigungselement befestigt ist, der selektiv zum Bewegen des Verbindungselements zwischen der zurückgezogenen und der erweiterten Position betreibbar ist.

8. Fahrzeug nach Anspruch 6 oder 7, **dadurch gekennzeichnet dass** der Aktuator eine hydraulisch betriebene Kolben-Zylinder-Einheit ist.

9. Fahrzeug nach einem der vorhergehenden Ansprüche, **dadurch gekennzeichnet, dass** eine Leistungsabschaltung oder -trennung vorgesehen ist, wobei die Leistungsabschaltung oder -trennung einen finalen Antrieb aufweist mit einer Eingangswelle, einer Ausgangswelle und wobei der finale Antrieb in einem Gehäuse montiert ist, welches lösbar an dem Chassis montiert ist.

10. Fahrzeug nach Anspruch 9, **dadurch gekennzeichnet, dass** die Eingangswelle des finalen Antriebs mit dem Ausgang über eine Leistungstrennungs-Kupplung verbunden ist.

11. Fahrzeug nach Anspruch 10, **dadurch gekennzeichnet, dass** ein Lager, welches eine Eingangswelle der Leistungstrennungs-Kupplung lagert, in einem Befestigungselement montiert ist, und dass das Befestigungselement für das Lager beweglich ist zwischen einer ersten und einer zweiten Position und in diesen sicherbar ist, wobei in der ersten Position das Gehäuse des finalen Antriebs an dem Chassis befestigt ist und in der zweiten Position das Gehäuse des finalen Antriebs von dem Chassis separiert ist.

12. Fahrzeug nach einem der vorhergehenden Ansprüche, **dadurch gekennzeichnet, dass** ein Rahmen der Anhängevorrichtung an den freien Enden der unteren Verbindungen und der oberen Verbindung befestigt ist.

13. Fahrzeug nach Anspruch 12, **dadurch gekennzeichnet, dass** der Rahmen eine Befestigung für einen finalen Antrieb besitzt und dass das Gehäuse des finalen Antriebs an der Befestigung für den finalen Antrieb befestigbar ist.

14. Fahrzeug nach einem der vorhergehenden Ansprüche, **dadurch gekennzeichnet, dass** das obere Verbindungs-Befestigungselement verschieblich oder gleitend an dem Chassis gelagert oder befestigt ist.

15. Fahrzeug nach einem der vorhergehenden Ansprüche, **dadurch gekennzeichnet, dass** das oder jedes untere Verbindungs-Befestigungselement gleitend an dem Chassis gelagert oder befestigt ist.

16. Fahrzeug nach einem der Ansprüche 1 bis 14, **dadurch gekennzeichnet, dass** ein Paar von unteren Verbindungs-Befestigungselementen vorgesehen ist, wobei jedes untere Verbindungs-Befestigungselement verdrehbar hinsichtlich des Transaxle-Gehäuses befestigt oder gelagert ist.

17. Fahrzeug nach Anspruch 16, **dadurch gekennzeichnet dass** das Befestigungselement einen kreisförmigen Ring besitzt, der verdrehbar an einem Gehäuse des finalen Antriebs gelagert oder montiert ist.

18. Fahrzeug nach einem der vorhergehenden Ansprüche, **dadurch gekennzeichnet, dass** das Lager-Befestigungselement gleitend oder verschieblich an dem Chassis gelagert oder befestigt ist.

19. Fahrzeug nach Anspruch 18, **dadurch gekennzeichnet, dass** in der ersten Position das Lager-Befestigungselement gegenüber dem Chassis gesichert ist und dass in der zweiten Position das Lager-Befestigungselement gegenüber dem oberen Verbindungs-Befestigungselement gesichert ist.

20. Fahrzeug nach Anspruch 18, **dadurch gekennzeichnet, dass** bei Anordnung des Lager-Befestigungselements in der ersten Position und des oberen Verbindungs-Befestigungselements in der zurückgezogenen Position das obere Verbindungs-Befestigungselement gegenüber dem Lager-Befestigungselement gesichert ist.

21. Fahrzeug nach Anspruch 9 oder 10, **dadurch gekennzeichnet dass** an dem Chassis ein Leistungsabschaltungs-Antrieb befestigt ist oder dieser von dem Chassis gestützt ist mit einer Ausgangswelle, wobei die Ausgangswelle mit der Eingangswelle des finalen Antriebs mittels einer Kardan-Welle verbunden ist.

22. Fahrzeug nach einem der vorhergehenden Ansprüche, **dadurch gekennzeichnet, dass** das obere Verbindungs-Befestigungselement einen Arm besitzt, von dem ein Ende mit einer Befestigungsklammer der oberen Verbindung montiert ist und ein anderes Ende verdrehbar gelagert ist gegenüber zumindest einer Stütze, die fest mit dem Chassis verbunden ist.

23. Fahrzeug nach einem der vorhergehenden Ansprüche, **dadurch gekennzeichnet dass** an dem Chassis ein Liftarm montiert oder befestigt ist, wobei der Liftarm verdrehbar an dem Chassis montiert ist und wobei sich zumindest ein Aktuator sich zwischen dem Chassis und dem Liftarm erstreckt und hieran befestigt ist, wobei der Liftarm Befestigungen bereitstellt für Verbindungselemente der unteren Verbindung und wobei jedes Verbindungselement für die untere Verbindung befestigbar ist an einem Ende der unteren Verbindung und mit dem anderen Ende an dem Liftarm.

24. Fahrzeug nach Anspruch 23, **dadurch gekennzeichnet dass** der Liftarm ein Paar beabstandeter länglicher Elemente aufweist, die befestigt sind an einem Querschaft und sich von diesem erstrecken, wobei der Querschaft verdrehbar an dem Chassis gelagert oder montiert ist.

25. Fahrzeug nach Anspruch 23 oder 24, **dadurch gekennzeichnet, dass** zumindest eines der Verbindungselemente der unteren Verbindung einen linearen Aktuator aufweist.

26. Fahrzeug nach einem der Ansprüche 23 bis 25, **dadurch gekennzeichnet, dass** der Liftarm mit der Befestigungsklammer der oberen Verbindung montiert ist.

27. Fahrzeug nach Anspruch 24, **dadurch gekennzeichnet dass** die obere Verbindung einen linearen Aktuator aufweist.

28. Fahrzeug nach einem der vorhergehenden Ansprüche, **dadurch gekennzeichnet, dass** ein Stabilisierer und eine Befestigungsklammer für den Stabilisierer vorgesehen sind, wobei sich der Stabilisierer zwischen der Befestigungsklammer und einem Liftarm erstreckt.

29. Fahrzeug nach Anspruch 28, **dadurch gekennzeichnet, dass** der Stabilisierter ein linearer Aktuator ist.

30. Fahrzeug nach Anspruch 28 oder 29, **dadurch gekennzeichnet dass** der Befestigungspunkt für den Stabilisierer an einem unteren Verbindungs-Befestigungselement montiert ist.

31. Fahrzeug nach Anspruch 12 oder 13, **dadurch gekennzeichnet, dass** der Rahmen der Anhängevorrichtung eine Zughakenbefestigung und einen Zughaken aufweist.

32. Fahrzeug nach Anspruch 31, **dadurch gekennzeichnet, dass** die Zughakenbefestigung verdrehbar ist zwischen zumindest zwei Positionen und mit dem zumindest einen Zughaken montiert ist.

33. Fahrzeug nach Anspruch 12 oder 13, **dadurch gekennzeichnet, dass** der Rahmen für die Anhängevorrichtung mehrere Befestigungsklammern für ein Gerät besitzt.

## Revendications

1. Véhicule, comprenant :
un châssis (2) ayant une première extrémité et une seconde extrémité ;
un attelage monté sur le châssis, l'attelage comprenant un élément de montage d'articulation supérieure (18), et au moins un élément de montage d'articulation inférieure (30), **caractérisé en ce que** le ou chaque élément de montage d'articulation inférieure (30) est monté sur le châssis (2) pour assurer un déplacement entre des positions rétractée et étendue, et dans lequel, dans ladite position étendue, une extrémité libre d'une articulation inférieure (12) fixée par une extrémité de celle-ci à un élément de montage d'articulation inférieure (30) s'étend au-delà de la première et de la seconde extrémité du châssis (2), et dans lequel, dans la position rétractée, l'extrémité libre de l'articulation inférieure (12) est plus proche de ladite une extrémité du châssis (2) que dans la position étendue.

2. Véhicule selon la revendication 1, dans lequel, dans la position rétractée, ladite extrémité libre de l'articulation inférieure est sensiblement adjacente à ladite une des première et seconde extrémités du châssis.

3. Véhicule selon la revendication 1 ou 2, dans lequel l'élément de montage d'articulation supérieure est monté sur le châssis pour un mouvement entre des positions rétractée et étendue, et dans lequel, dans ladite position étendue, une extrémité libre d'une articulation supérieure fixée par une extrémité de celle-ci à l'élément de montage d'articulation supérieure s'étend au-delà d'une des première et seconde extrémités du châssis, et dans lequel, dans la position rétractée, l'extrémité libre de l'articulation supérieure est plus proche de ladite une extrémité du châssis que dans la position étendue.

4. Véhicule selon la revendication 3, dans lequel, dans la position rétractée, ladite extrémité libre de l'articulation supérieure est sensiblement adjacente à ladite une des première et seconde extrémités du châssis.

5. véhicule selon l'une quelconque des revendications précédentes, dans lequel l'élément de montage d'articulation supérieure et le ou chaque élément de montage d'articulation inférieure sont montés de manière coulissante sur le châssis.

6. Véhicule selon l'une quelconque des revendications précédentes, et comprenant en outre un actionneur relié à l'élément de montage d'articulation supérieure et sélectivement actionnable pour déplacer ledit élément de montage d'articulation supérieure entre lesdites positions rétractée et étendue, indépendamment du mouvement du ou de chaque élément de montage d'articulation inférieure.

7. Véhicule selon l'une quelconque des revendications précédentes, dans lequel un actionneur est relié à au moins un élément de montage d'articulation inférieure et est actionnable de manière sélective pour déplacer ledit élément de montage d'articulation entre lesdites positions rétractée et étendue.

8. Véhicule selon la revendication 6 ou 7, dans lequel ledit actionneur est un système à piston et cylindre à commande hydraulique.

9. Véhicule selon l'une quelconque des revendications précédentes, comprenant une prise de force, ladite prise de force comprenant une transmission finale comprenant un arbre d'entrée, un arbre de sortie, ladite transmission finale étant montée dans un carter, ledit carter étant monté sur ledit châssis de manière amovible.

10. Véhicule selon la revendication 9, dans lequel l'arbre d'entrée de la transmission finale est relié à la sortie d'un embrayage de prise de force.

11. Véhicule selon la revendication 10, dans lequel un palier supportant un arbre d'entrée d'embrayage de prise de force est monté dans un élément de montage, et dans lequel l'élément de montage de palier peut se déplacer entre et être fixé dans une première et une seconde position, dans lequel, dans la première position, le carter de la transmission finale est relié au châssis et, dans la seconde position, le carter de la transmission finale est séparé du châssis.

12. Véhicule selon l'une quelconque des revendications précédentes, dans lequel un cadre d'attelage est fixé aux extrémités libres des articulations inférieures et de l'articulation supérieure.

13. Véhicule selon la revendication 12, dans lequel ledit cadre comprend un support de transmission finale, et dans lequel le carter de transmission finale peut être fixé au dit support de transmission finale.

14. Véhicule selon l'une quelconque des revendications précédentes, dans lequel ledit élément de montage d'articulation supérieure est monté de manière coulissante sur le châssis.

15. Véhicule selon l'une quelconque des revendications précédentes, dans lequel le ou chaque élément de montage d'articulation inférieure est monté de manière coulissante sur le châssis.

16. Véhicule selon l'une quelconque des revendications 1 à 14, comprenant une paire d'éléments de montage d'articulation inférieure, chaque élément de montage d'articulation inférieure étant monté de manière rotative par rapport au dit carter de transaxe.

17. Véhicule selon la revendication 16, dans lequel ledit élément de montage comprend une bague annulaire montée de manière rotative sur un carter de transmission finale.

18. Véhicule selon l'une quelconque des revendications précédentes, dans lequel l'élément de montage de palier est monté de manière coulissante sur le châssis.

19. Véhicule selon la revendication 18, dans lequel, dans ladite première position, l'élément de montage de palier est fixé au châssis, et dans ladite seconde position, l'élément de montage de palier est fixé à l'élément de montage d'articulation supérieure.

20. Véhicule selon la revendication 18, dans lequel quand l'élément de montage de palier est dans la première position, et l'élément de montage d'articulation supérieure est dans la position rétractée, l'élément de montage d'articulation supérieure est fixé à l'élément de montage de palier.

21. Véhicule selon la revendication 9 ou 10, dans lequel le châssis supporte une transmission de prise de force, ayant un arbre de sortie, ledit arbre de sortie étant relié à l'arbre d'entrée de la transmission finale au moyen d'un arbre de transmission à cardan.

22. Véhicule selon l'une quelconque des revendications précédentes, dans lequel l'élément de montage d'articulation supérieure comprend un bras dont une extrémité supporte un support de fixation d'articulation supérieure, et dont l'autre extrémité est montée de manière rotative sur au moins un montant relié de manière fixe au dit châssis.

23. Véhicule selon l'une quelconque des revendications précédentes, dans lequel le châssis supporte un bras de relevage, et dans lequel ledit bras de relevage est monté de manière rotative sur ledit châssis et au moins un actionneur s'étend entre le châssis et le bras de relevage et est fixé à ceux-ci, le bras de relevage fournissant des supports pour des éléments de connexion d'articulation inférieure, chaque let de connexion d'articulation inférieure pouvant être fixé par une extrémité à une articulation inférieure et par son autre extrémité au bras de relevage.

24. Véhicule selon la revendication 23, dans lequel ledit bras de relevage comprend une paire d'éléments allongés espacés fixés à un arbre transversal et s'étendant à partir de celui-ci, ledit arbre transversal étant monté de manière rotative dans le châssis.

25. Véhicule selon la revendication 23 ou 24, dans lequel au moins un des éléments de connexion d'articulation inférieure comprend un actionneur linéaire.

26. Véhicule selon l'une quelconque des revendications 23 à 25, dans lequel le bras de relevage supporte le support de fixation d'articulation supérieure.

27. Véhicule selon la revendication 24, dans lequel l'articulation supérieure comprend un actionneur linéaire.

28. Véhicule selon l'une quelconque des revendications précédentes, comprenant en outre un support de montage de stabilisateur et un stabilisateur s'étendant entre ledit support de montage et un bras de relevage.

29. Véhicule selon la revendication 28, dans lequel le stabilisateur est un actionneur linéaire.

30. Véhicule selon la revendication 28 ou 29, dans lequel le point de montage du stabilisateur est monté sur un élément de montage d'articulation inférieure.

31. Véhicule selon la revendication 12 ou 13, dans lequel ledit cadre d'attelage comprend un support de crochet d'attelage, et un crochet d'attelage.

32. Véhicule selon la revendication 31, dans lequel ledit support de crochet d'attelage peut pivoter entre au moins deux positions et il supporte au moins un crochet d'attelage.

33. Véhicule selon la revendication 12 ou 13, dans lequel le cadre d'attelage comprend une pluralité de supports de fixation d'outil.
